# EUROPEAN PATENT APPLICATION

(11) **EP 1 770 561 A2**
(43) Date of publication of application: **04.04.2007**
(21) Application number: 06254959.7
(22) Date of filing: 25.09.2006
(51) Int. Cl.: G06F 17/30

(54) **Computer assisted domain specific entity mapping method and system**

(30) Priority: 30.09.2005 US 240880
(71) Applicant: General Electric Company, Schenectady, NY 12345 (US)
(72) Inventor: Avinash, Gopal B., New Berlin Wisconsin 53151 (US); Sirohey, Saad Ahmed, Pewaukee Wisconsin 53072 (US); Weiner, Allision Leigh, Milwaukee Wisconsin 53211 (US)
(74) Representative: Illingworth-Law, William Illingworth

(57) **Abstract**

A technique for identifying, analyzing, structuring, mapping and classifying (82) data entities (28, 30) is disclosed. A conceptual framework is established by a domain definition (12) having an association list of attributes (26) of interest. Data entities are accessed (70), analyzed (74), structured if appropriate, mapped and classified in accordance with the association list and attributes found in the entities, and in accordance with rules and algorithms for analyzing, recognizing and classifying the attributes. Various types of analysis may be performed following the classification. Searches and selection of the data entities may also be performed. Complex data entities may be processed, including text documents (430), image data (432), audio data (434), waveform data (438), and combinations of these.

## Description

### BACKGROUND

The invention relates generally to the field of data classification and mapping. More specifically, the invention relates to techniques for computer-assisted definition of relevant domains and to the automated classification of documents and other data entities based upon such definitions, including selection, analysis and classification criteria that are non-textual in nature.

A wide array of techniques have been developed and are currently in use for identifying data entities of relevance to a particular field of interest. As used herein, "data entities" may include any type of digitized data capable of being identified, analyzed and classified by automated techniques. Such entities may include, for example, textual documents, image files, audio files, waveform data, and combinations of these, to mention only a few.

Existing data entity identification, analysis and classification techniques are often designed to identify relevant documents and other data items and, to some degree, to collect either the items themselves or relevant portions. Common search engines, for example, allow for Boolean searches of words or other criteria. The searches may be executed on the documents themselves, or on portions of documents, indexed documents, and so forth. Certain search tools employ tagging of documents with relevant terms for similar purposes. Results are typically returned as listings, sometimes with links to the documents. Common techniques also employ rankings of relevancy of documents.

While such tools are quite useful for many searches, there is a need for improved tools which can perform more useful searches and classification. There is a particular need for a tool which can permit extensive analysis, structuring, mapping and classification of data entities based upon more complete and user-directed definition of relevant domains and classifications within the domains. Moreover, there is a need for a tool which can search and classify documents, images, text files, audio files, and so forth based upon a combination of criteria.

### BRIEF DESCRIPTION

Embodiments of the present invention provide novel techniques for data entity identification, analysis, structuring, mapping and classification designed to respond to such needs. The technique is said to be "domain-specific" in that it facilitates the definition of a "domain" by a user. The domain may pertain to any conceptual field whatsoever that is defined by the user, along with conceptual subdivisions or levels within the domain, and eventually particular attributes of data entities that may be located. The domain, then, essentially defines a conceptual framework according to which data entities may be identified, structured, mapped and classified.

Embodiments of the invention permit a vast range of data entities to be identified, selected, and processed, including data defined as text, images, waveforms, audio files, and so forth, as well as combinations of these. Embodiments permits particular multidimensional domains of interest (such as a subject matter domain) to be defined by setting definitions of axes, labels for each axis and attributes of each label. The axes may subdivide the domain, while the labels may subdivide the axes. Any number of subsequent levels may be thus defined. The attributes for the basis of the labels and generally form the basis of criteria on which data entities are identified, and processed. The entire domain definition may be changed, refined, expanded, or otherwise manipulated over time.

The axes, labels and attributes may all be or include any one of the multiple types of data definitions, that is, text, images, waveforms, audio files, and so forth. Subsequently, operations such as searches for data entities, their structuring, their mapping onto the domain, their classification, their analysis, and so forth, may be done directly by application of the data definition, such as by direct comparison of code representative of the desired text, images, waveforms, audio files, and so forth.

From this framework, then, a knowledge base or integrated knowledge base (IKB) may be established, and subsequent searches, analysis, mapping and classification, and use of the entities may be made based upon the IKB or based upon new searches performed in a different database.

A range of user-configurable displays are also provided to facilitate user analysis and interaction with the domain definition, domain refinement, statistical or other analysis of the data entities, or with the data entities themselves.

The invention contemplates methods for carrying out such domain definition and data entity analysis, structuring, mapping and classification, as well as systems and software for performing such functionality.

### DRAWINGS

These and other features, aspects, and advantages of the present invention will become better understood when the following detailed description of embodiments provided, by way of example, is read with reference to the accompanying drawings in which like characters represent like parts throughout the drawings, wherein:
FIG. 1 is a diagrammatical overview of a data entity identification, structuring, mapping and classification system in accordance with aspects of the present techniques;
FIG. 2 is a flow diagram of exemplary domain definition logic which may be employed in a system such as that illustrated in FIG. 1;
FIG. 3 is a flow diagram of entity processing logic based upon a domain definition;
FIG. 4 is a diagrammatical representation of exemplary mapping of data entities performed through the logic of FIG. 3;
FIG. 5 is a diagrammatical representation of related domains and domain levels that may be implemented in accordance with aspects of the present techniques;
FIG. 6 is a diagrammatical representation of a multi-level domain definition implemented to facilitate structuring, mapping, classification and analysis of data entities;
FIG. 7 is a representation of an exemplary domain definition template for use with a programmed computer in accordance with aspects of the present technique;
FIG. 8 is a representation of an exemplary template for defining axes and labels of the domain defined by the template of FIG. 7;
FIG. 9 is an exemplary interface for defining data entity attributes for axes and labels of a domain;
FIG. 10 is a flow chart illustrating exemplary logic for search and classification of data entities, and for establishment of an IKB based upon such search and classification;
FIG. 11 is a diagrammatical representation of how a collection of entities may be mapped into an IKB using a domain definition and rules in accordance with the present techniques;
FIG. 12 is a diagrammatical representation of certain processing steps that may be performed for analysis and classification of data entities;
FIG. 13 is a diagrammatical representation of one exemplary process for identifying relevant records or data entities in a known field, such as an IKB;
FIG. 14 represents one exemplary representation of an analyzed set of data entities, such as textual documents with highlighting based upon a domain definition as a conceptual framework;
FIG. 15 is a further representation of analysis performed on a set of data entities to identify correspondence between attributes or portions of the conceptual framework of the domain definition found in a set of data entities;
FIG. 16 is an exemplary representation of analysis of a series of data entities showing overlap or intersection of correspondence between entities having specific attributes;
FIG. 17 is a further exemplary representation of analysis performed on a series of records or data entities for a portion of a domain definition or analytical or conceptual framework;
FIG. 18 is a further exemplary representation of analysis performed on a series of data entities showing classification by other criteria, such as by ownership;
FIG. 19 is a further exemplary representation of analysis and classification of data entities by the records themselves (i.e., the data entities);
FIG. 20 is a further exemplary representation of data analyzed for a series of data entities, indicating cumulative counts of entities by the conceptual framework of the domain definition;
FIG. 21 is a further representation of an exemplary analysis of data entities similar to that illustrated in FIG. 20, but showing exemplary additional displays of data that may be obtained based upon the analyzed and classified data entities;
FIG. 22 is a diagrammatical representation of a further interactive representation of analysis and classification of data entities based upon a domain definition and conceptual framework associated therewith;
FIG. 23 is a diagrammatical representation of the domain definition, search, analysis, mapping and classification techniques applied to image data files and associated text files for establishment of a database of such files, such as an IKB;
FIG. 24 is a further diagrammatical representation of exemplary workflow for analysis, mapping and classification of image and text files for classification and mapping of the files in accordance with aspects of the present technique;
FIG. 25 is a representation of an exemplary display of a series of summaries of the analysis of image and text files following the processes of FIGS. 23 and 24;
FIG. 26 is a diagrammatical representation of a matrix of exemplary feature or characteristic types that may be defined, sought, located and mapped in data entities;
FIG. 27 is a diagrammatical representation of an exemplary axis having labels defined in terms of images and features within images;
FIG. 28 is a similar diagrammatical representation of an exemplary axis having labels defined by reference to waveforms; and
FIG. 29 is a similar diagrammatical representation of an exemplary axis having labels defined by reference to audio features.

### DETAILED DESCRIPTION

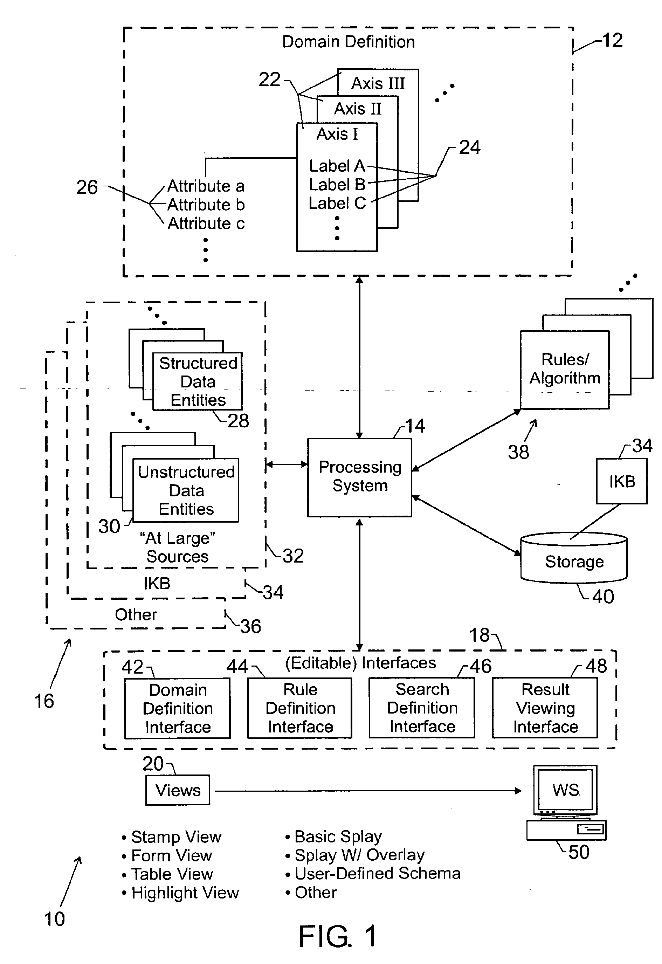

Turning to the drawings and referring first to FIG. 1, a data entity mapping system 10 is illustrated diagrammatically for establishing a domain definition, and for searching, analyzing, structuring, mapping and classifying data-entities in accordance with the definition. In the embodiment illustrated in FIG. 1, the domain definition is designated by reference numeral 12. As described in greater detail below, the domain definition may relate to any relevant field, such as technical fields. The domain definition may be established in accordance with the techniques described below, and may generally be thought of a conceptual framework of logically subdivided portions of the relevant field. Each portion may be further subdivided into any number of conceptual levels. The levels are eventually associated with attributes likely to be found in the data entities, permitting their identification, analysis, structuring, mapping and classification. As described below, these attributes may be defined by text, features or characteristics of images, features or characteristics of waveforms, features or characteristics of audio files, or any other type of codification of information.

The domain definition 12 is linked to a processing system 14 which utilizes the domain definition for identifying data entities from any of a range of data resources 16. The processing system 14 will generally include one or more programmed computers, which may be located at one or more locations. The domain definition itself may be stored in the processing system 14, or the definition may be accessed by the processing system 14 when called upon to search, analyze, structuring, mapping or classify the data entities. To permit user interface with the domain definition, and the data resources and data entities themselves, a series of editable interfaces 18 are provided. Again, such interfaces may be stored in the processing system 14 or may be accessed by the system as needed. The interfaces generate a series of views 20 about which more will be said below. In general, the views allow for definition of the domain, refinement of the domain, analysis of data entities, viewing of analytical results, and viewing and interaction with data entities themselves.

Returning to the domain definition 12, in the present discussion, the terms "axis," "label," and "attribute" are employed for different levels of the conceptual framework represented by the domain definition. As will be appreciated by those skilled in the art, any other terms may be used. In general, the axes of the definition represent conceptual subdivisions of the domain. The axes may not necessarily cover the entire domain, and may, in fact, be structured strategically to permit analysis and viewing of certain aspects of the data entities in particular levels, as discussed below. The axes, designated at reference numeral 22, are then subdivided by the labels 24. Again, any suitable term may be used for this additional level of conceptual subdivision. The labels generally are conceptual portions of the respective axis, although the labels may not cover the full range of concepts assignable to the axis. Moreover, the present techniques do not exclude overlaps, redundancies, or, on the contrary, exclusions between labels of one axis and another, or indeed of axes themselves.

Each label is then associated with attributes 26. Again, attributes may be common between labels or even between axes. In general, however, strategic definition of the domain permits one-to-many mapping and classification of individual data entities in ways that allow a user to classify the data entities. Thus, some distinctions between the axes, the labels and the attributes are useful to allow for distinction between the data entities.

Furthermore, by way of example only, the present techniques may be applied to identification of textual documents, as well as documents with other forms and types of data, such as image data, audio data, waveform data, and so forth, as discussed below. By way of further example, the technique may be applied to identifying intellectual property rights, such as patents and patent applications, in a particular technical field or domain of interest. Within such domains, a range of individual classifications may be devised, which may follow traditional classifications, or may be defined completely by the user based upon particular knowledge or interest. Within each of the individual axes, then, individual subdivisions of the classification may be implemented. As described in greater detail below, many such levels of classification may be implemented. Finally, because the documents may be primarily textual in nature, individual attributes 26 may include particular words, word strings, phrases, and the like. In other types of data entities, attributes may include features of interest in images, portions of audio files, portions or trends in waveforms, and so forth. The domain definition, then, permits searching, analysis, structuring, mapping and classification of individual data entities by the particular features identifiable within and between the entities.

As will be discussed in greater detail below, however, while the present techniques provide unprecedented tools for analysis of textual documents, the invention is in no way limited to application with textual data entities only. The techniques may be employed with data entities such as images, audio data, waveform data, and data entities which include or are associated with one another having one or more of these types of data (i.e., text and images, text and audio, images and audio, text and images and audio, etc.). Moreover, by permitting the axes, labels and attributes themselves to take on the character likely to be of interest in the target data entities (e.g., an image feature, a waveform feature, an audio file feature, and so forth), independent or in compliment to a textual or word description of the feature, a powerful entity management tool is provided that goes far beyond mere textual search and categorization.

Based upon the domain definition, the processing system 14 accesses the data resources 16 to identify, analyze, structure, map and classify individual data entities. A wide range of such data entities may be accessed by the system, and these may be found in any suitable location or form. For example, the present technique may be used to identify and analyze structured data entities 28 or unstructured entities 30. Structured data entities 28 may include such structured data as bibliography content, pre-identified fields, tags, and so forth. Unstructured data entities may not include any such identifiable fields, but may be, instead, "raw" data entities for which more or different processing may be in order. Moreover, such structured and unstructured data entities may be considered from "at large" sources 32, or from known and preestablished databases such as an integrated knowledge base (IKB) 34. As used herein, the term "at large" sources include any sources that are not pre-organized, typically by the user into an IKB such at large sources may be found via the Internet, libraries, professional organizations, user groups, or from any other resource whatsoever.

The IKB, on the other hand, may include data entities which are pre-identified, analyzed, structured, mapped and classified in accordance with the conceptual framework of the domain definition. The establishment of an IKB, as discussed in greater detail below, is particularly useful for the further and more rapid analysis and reclassification of entities, and for searching entities based upon user-defined search criteria. However, it should be borne in mind that the same or similar search criteria may be used for identifying data entities from at large sources, and the present technique is not intended to be limited to use with a pre-defined IKB.

Finally, as illustrated in FIG. 1, any other sources of data entities may be drawn upon by the processing system 14 as represented generally by reference numeral 36. These other sources may include sources that become available following establishment of the domain and classification, such as newly established or newly subscribed to resources. It should also be borne in mind that such new resources may come into existence at any time, and the present technique provides for their incorporation into the classification system, and indeed for refinement of the classification system itself to accommodate such new data entities.

The present techniques provide several useful functions that should be considered as distinct, although related. First, "identification" of data entities relates to the selection of entities of interest, or of potential interest. This is typically done by reference to the attributes of the domain definition, and to any rules or algorithms implemented to work in conjunction with the attributes. "Analysis" of the entities entails examination of the features defined by the data. Many types of analysis may be performed, again based upon the attributes of interest, the attributes of the entities and the rules or algorithms upon which structuring, mapping and classification will be based. Analysis is also performed on the structured and classified data entities, such as to identify similarities, differences, trends, and even previously unrecognized correspondences.

"Structuring" as used herein refers to the establishment of the conceptual framework or domain definition. In the data mining field, the term "structuring" and the distinction between "structured" and "unstructured" data may sometimes be used (e.g., as above with respect to the structured and unstructured entities represented in Fig. 1). Such "structure" may be thought of as implementing a particular analytical system on and within certain data entities. Thus, a document may be subdivided into a title, abstract, and subparts. Within each of these, however, the data may remain essentially unstructured. The present techniques permit such structure to be used, altered or even discarded, depending upon the particular conceptual framework of the domain definition. Such structuring may entail translation, formatting, tagging, or otherwise transforming the data to a form that is more readily searched, analyzed, compared and classified. By way of example, such structuring may include conversion of the data into a particular type of file or format, such as through use of a markup language, such as XML.

"Mapping" of the entities involves relation of the attributes of the domain definition to the features and attributes of the data entities. Such mapping may be thought of as a process of applying the domain definition to the data of each entity, in accordance with the attributes of the domain definition and the rules and algorithms employed. Although highly related, mapping is distinguished from "classification" in the present context. Classification is the assignment of a relationship between the subdivisions of the conceptual framework of the domain definition (e.g., via the attributes of the axes and labels) and the data entities. In the present context, reference is made to one-to-many mapping and to one-to-many classification, with mapping being the process for arriving at the classification based upon the structural system of the domain definition.

The resulting process may be distinguished from certain existing techniques, such as data mining, taxonomy, markup languages, and simple search engines, although certain of these may be used for the subprocesses implemented here. For example, typical data mining identifies relationships or patterns in data from a data entity standpoint, and not based upon a structure established by a domain definition. Data mining generally does not provide one-to-many mappings or classifications of entities. Taxonomies impose a unique classification of entities by virtue of the breakdown of the categories defining the taxonomy. Markup languages, while potentially useful for structuring entities, are not well suited for one-to-many mapping or classification, and generally provide "structure" within the entities based upon the tags or other features of the language. Similarly, simple search techniques typically only return listings of entities that satisfy certain search criteria, but provide no mapping or classification of the entities as provided herein.

The processing system 14 also draws upon rules and algorithms 38 for analysis, structuring, mapping and classification of the data entities. As discussed in greater detail below, the rules and algorithms 38 will typically be adapted for specific types of data entities and indeed for specific purposes (e.g., analysis and classification) of the data entities. For example, the rules and algorithms may pertain to analysis of text in textual documents or textual portions of data entities. The algorithms may provide for image analysis for image entities or image portions of entities, and so forth. The rules and algorithms may be stored in the processing system 14, or may be accessed as needed by the processing system. For example, certain of the algorithms may be quite specific to various types of data entities, such as diagnostic image files. Sophisticated algorithms for the analysis and identification of features of interest in image may be among the algorithms, and these may be drawn upon as needed for analysis of the data entities.

The rules and algorithms used for analysis, structuring, mapping and classification of the data entities will typically be specifically adapted to the type of data entity and the nature of the criteria used for the domain definition. For example, rather then simply describe or define a feature of interest in textual terms, the rules and algorithms may aid in locating and processing data entities by reference to what a feature "looks like" or "sounds like" or any other similar criterion. Where desired, the rules and algorithms can even provide some degree of freedom or tolerance in the comparison process that will be based on the axes, labels and attributes. Thus, for example, classification may be made by reference to a label or axis that an image "looks most like" or that a waveform "most resembles" or that a sound "sounds most like".

The data processing system 14 is also coupled to one or more storage devices 40 for storing results of searches, results of analyses, user preferences, and any other permanent or temporary data that may be required for carrying out the purposes of the analysis, structuring, mapping and classification. In particular, storage 40 may be used for storing the IKB 34 once analysis, structuring, mapping and classification have been completed on a series of identified data entities. Again, additional data entities may be added to the IKB over time, and analysis and classification of data entities in the IKB may be refined and even changed based upon changes in the domain definition, the rules applied for analysis and classification, and so forth.

A range of editable interfaces may be envisaged for interacting with the domain definition, the rules and algorithms, and the entities themselves. By way of example only, as illustrated in FIG. 1, several such interfaces are presently contemplated. These may include a domain definition interface 42 for establishing the axes, labels and attributes of the domain. A rule definition interface 44 may be provided for defining particular rules to be used, or links to external rules and algorithms. A search definition interface 46 is provided for allowing users to search, analyze and classify data entities either from at large sources or an IKB, and various result viewing interfaces 48 are contemplated for illustrating the results of analysis of one or more data entities. The interfaces will typically be served to the user by a workstation 50 which is linked to the processing system 14. Indeed, the processing system 14 may be part of a workstation 50, or may be completely remote from the workstation and linked by a suitable network. Many different views may be served as part of the interfaces, including views enumerated in FIG. 1, and designated a stamp view, a form view, a table view, a highlight view, a basic spatial display (splay), a splay with overlay, a user-defined schema, or any other view. It should be borne in mind that these are merely exemplary reviews of analysis and classification, and many other views or variants of these views may be envisaged.

It should be noted that the representation made of an axis, label or attribute in such interfaces may actually constitute a "shorthand" or iconographic representation only. That is, where a characteristic is defined by an axis, label or attribute that is other than textual, and does not readily lend itself to visual representation, a visual representation may be nevertheless placed in the interface. Where desired, the user may be able to access the actual data characteristic (in any appropriate form) by selection of the iconographic representation. Thus, for example, an audio feature may be represented by an icon, and the actual sound corresponding to the feature may be played when desired. Other features, such as in images, waveforms, and so forth, may be simplified in the interface, with more detailed versions available upon selection. In all cases, however, it is the feature itself and not simply the iconographical representation that serves as the basis for defining the domain and processing of entities of interest.

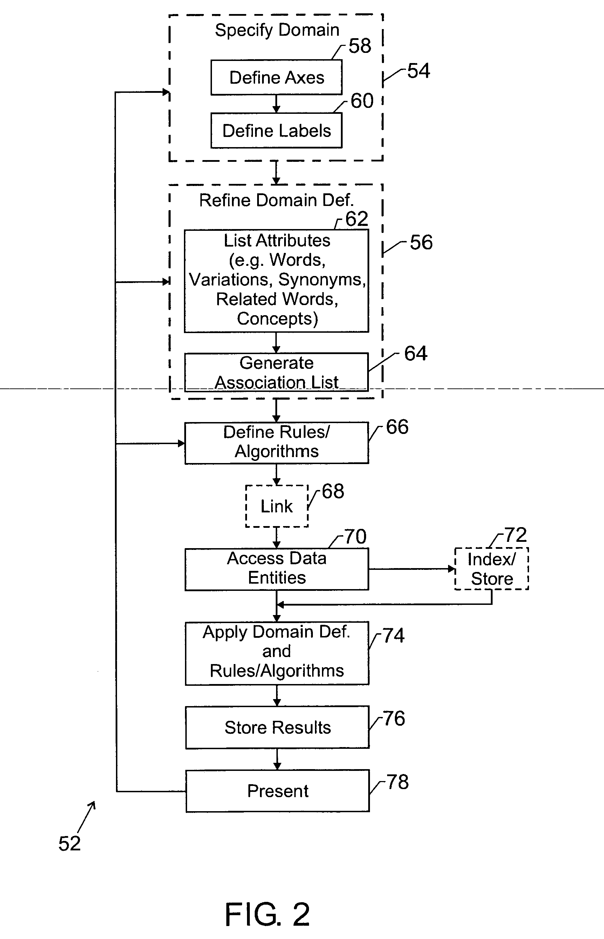

As noted above, the present techniques provide for user-definition and refinement of the conceptual framework represented by the domain definition. FIG. 2 illustrates exemplary steps in defining the conceptual framework of a domain. The overall logic, designated generally by reference numeral 52 includes general specification of the domain in a first phase 54, followed by refinement of the domain definition in a second phase 56. The specification of the domain 54 may include a range of steps, such as a definition of domain axes 58 and definition of labels 60 within each axis. As discussed above, the axes generally represent conceptual portions of the domain broken down in any suitable fashion defined by the user. The labels, in turn, represent conceptual breakdown of the individual axes. The labels, and indeed the axes, may be thought of as conceptual sub-classification levels. As discussed in greater detail below, certain of the levels may be redundant or lower levels may also be redundant with higher levels to permit "conceptual zooming" within the domain. That is, particular labels may also be listed as axes of the domain, permitting analysis and visualization of the bases for particular classifications of data entities.

Following specification of the domain, the domain may be further refined in phase 56. Such refinement may include listing attributes of the individual labels of each axis. In general, these attributes may be any feature of the data entities which may be found in the data entities and which facilitate their identification, analysis, structuring, mapping or classification. As indicated in FIG. 2, for documents, such entities may include words, variations on words and terms, synonyms, related words, concepts, and so forth. These may be simply listed for each label as discussed in greater detail below. Based upon the listed attributes, an association list may be generated as indicated at step 64. This association list effectively represents the collection of attributes to be associated with each label and axis. Here again, the association list may include features defined in any suitable manner for images, waveforms, audio files, and so forth, as well as such features in combination with text or in combination with one another.

Following definition of the domain, the rules and algorithms to be applied for the search, analysis, structuring, mapping and classification of specific data entities are identified and defined at step 66. These rules and algorithms may be defined by the user along with the domain. Such rules and algorithms may be as simple as whether and how to identify words and phrases (e.g., whether to search a whole word or phrase, proximity criteria, and so forth). In other contexts, much more elaborate algorithms may be employed. For example, even in the analysis of textual documents, complex text analysis, indexing, classification, tagging, and other such algorithms may be employed. In the case of image data entities, the algorithms may include algorithms that permit the identification, segmentation, classification, comparison and so forth of particular regions or features of interest within images. In the medical diagnostic context, for example, such algorithms may permit the computer-assisted diagnosis of disease states, or even more elaborate analysis of image data. Moreover, the rules and algorithms may permit the separate analysis of text and other data, including image data, audio data, and so forth. Still further, the rules and algorithms may provide for a combination of analysis of text and other data.

As discussed in greater detail below, the present techniques thus provide unprecedented liberty and breadth in the types of data that can be analyzed, and the classification of data entities based upon a combination of algorithms for text, image, and other types of data contained in the entities. At step 68, optionally, links to such rules and algorithms may be provided. Such links may be useful, for example, where particular data entities are to be located, but complex, evolving, or even new algorithms are available for their analysis and classification. Many such links may be provided, where appropriate, to facilitate classification of individual data entities once identified, and based upon user-input search criteria.

At step 70 the data entities are accessed. The data entities, again, may be found in any suitable location, including at large sources and known or even pre-defined knowledge bases and the like. The present techniques may extend to acquisition or creation of the data entities themselves, although the processing illustrated in FIG. 2 assumes that the data entities are already in existence. At step 72, optionally, the data entities may be indexed and stored. As will be appreciated by those skilled in the art, such indexing permits very rapid subsequent processing of the data entities. Such indexing may be particularly suitable for situations in which the data entities are to be accessed again and where the original entities are either unstructured or semi-structured, or even contain raw data (e.g., raw text). Where such indexing is performed, the indexed entities are typically stored at step 72 for later access, analysis, mapping and classification. Also, as noted above, even for entities and portions of entities that are structured or partially structured, the domain definition may utilize such structure (where, for example the existing structure within the entity corresponds to the structural system of the domain definition), or may restructure or further structure the data, or even disregard the existing data structure of the entity.

At step 74 in FIG. 2, the domain definition and the associated rules and algorithms are applied to the accessed data entities. Based upon the domain definition and the rules and algorithms, specific data entities are identified, analyzed, structured, mapped and classified. It should be noted, that, as described in greater detail below, the particular search performed at step 74 may be specified or crafted by the user. That is, interfaces for particular searches, both of at large sources and sources within an IKB, may be defined by a user via an appropriate search interface. In a present implementation, a search interface may be essentially identical to the resulting domain definition interface, including similar axes and labels, which may be selected by the user for performing the search. At step 76 the results of the application of the domain definition and rules are stored. At step 78 interface pages presenting the analysis and classification, and indeed the data entities themselves, are presented. Based upon such presentations, the domain definition and the attributes, as well as the rules and algorithms applied based upon the domain definition, may be altered as indicated by the arrows returning to the earlier processing steps illustrated in FIG. 2.

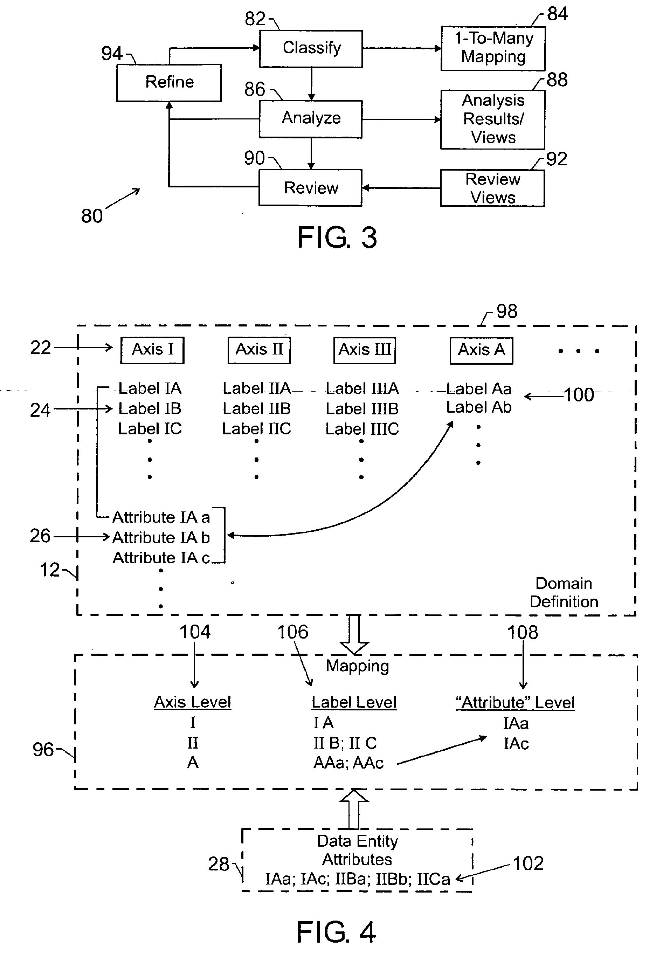

The particular steps and stages in accessing and treating data entities are represented diagrammatically in FIG. 3. In FIG. 3, the entity processing logic, designated generally by reference numeral 80, begins with classification of the data entities based upon the domain definition (or the search criteria defined by the user) and the rules and algorithms associated with the definition. This classification results in a one-to-many mapping and classification as indicated at reference numeral 84. As will be appreciated by those skilled in the art, such mapping is not typically performed by conventional search engines and data mining tools. That is, because many different axes, labels, and indeed various levels of these may be included in a domain definition, along with associated attributes, rules and algorithms, each data entity may be mapped onto and classified in more than one axis and label. Thus, any one data entity may be mapped onto many different conceptual subdivisions of the conceptual framework of the domain definition. This one-to-many mapping and classification provide a powerful basis for subsequent analysis, comparison, and consideration of the data entity.

Following the mapping and classification, analysis of the data entities may be performed as indicated at block 86 in FIG. 3. Again, such analysis may be based upon user-defined or accessed rules and algorithms, as well as based upon statistical analytical techniques. For example, where documents are searched and classified, correspondences, overlaps, and distinctions between the documents may be analyzed. Moreover, simple analyses such as counts and relevancy of the documents may be determined based upon the multiple criteria and many-to-one mapping performed in the classification steps. The analysis results and views are then output as indicated at block 88. Such views may be part of a software package implementing the present techniques, or may be user-defined.

At step 90, the analysis results and views are reviewed by a user. The review may take any suitable form, and may be immediate, such as following a search or may take place at any subsequent time. Again, the reviews are performed on the individual analysis views as indicated at block 92. Based upon the review, the user may refine any portion of the conceptual framework as indicated at block 94. Such refinement may include alteration of the domain definition, any portion of the domain definition, change of the rules or algorithms applied, change of the type and nature of the analysis performed, and so forth. The present technique thus provides a highly flexible and interactive tool for identifying, analyzing and classifying the data entities.

As noted above, within the conceptual framework of the domain definition, many strategies may be envisaged for subdividing and defining the axes and labels. FIG. 4 illustrates an exemplary mapping process for developing the one-to-many mapping and classification of a data entity. For the present purposes, the mapping, designated generally by reference numeral 96, is performed based upon an exemplary domain definition 98. The domain definition includes a series of axes 22 and their associated label 24. FIG. 4 also illustrates one example of how a "conceptual zoom" may be provided through the domain definition itself. In the illustrated example, attributes 26 of a first axis I, and of a label IA within that axis are provided at a label level 100 of a subsequent axis A. That is, axis A is identical to label IA of axis I. Because the attributes of label IA are the same as the labels of axis A, if selected by the user in a search, as described below, the returned search results may represent not only that certain data entities corresponded to the criteria of label IA, but will provide a higher level or resolution or granularity for why the entities were selected, mapped and classified by reference to the labels of axis A.

As indicated at reference numeral 102 in FIG. 4, a particular data entity is assumed to include a series of attributes. In the case of a textual entity, these attributes may be words or phrases. That is, certain words or phrases defined by the attributes of the domain definition are found in the data entity. The mapping, then, represented by reference numeral 96, will indicate that the data entity is to be classified in accordance with the individual axes, labels and label attributes, corresponding to the attributes found in the entity. In this case, at an axis level 104, the entity will be classified in accordance with axes I, II and A. Further, at a label level, the entity will be classified in labels IA, IIB, IIC, AAa, and AAc. Still further, due to the conceptual zoom provided by the additional axis A, at an "attribute" level, the entity will be associated with attributes IAa and IAc. In a present implementation, the attributes are not directly displayed in the returned search results, as described below. However, by placing the attributes of label IA in the label level 100 of axis A, this additional classification will be performed.

The mapping illustrated in FIG. 4 is performed at the classification phase of the present techniques discussed above. It should be noted that this classification may be user-selected. That is, as described below, once the definition is established, all entities identified may be structured, mapped and classified in accordance with all axes, labels and attributes. However, where appropriate, a user may select only some of the axes and labels for the desired classification. Once the classification is performed, however, searches may be made to identify particular data entities corresponding to some or all of the axes, labels and attributes that make up the conceptual framework of the domain definition. For this reason, it may be advantageous to employ all axes, levels and attributes for the identification, structuring, mapping and classification of data entities, and to permit user selection of a subset of these in later searches. Where indexing or other data processing techniques are employed, moreover, the use of all axes and labels, and the associated attributes, permits the indexing to cover all of these, thereby greatly facilitating subsequent searching and analysis.

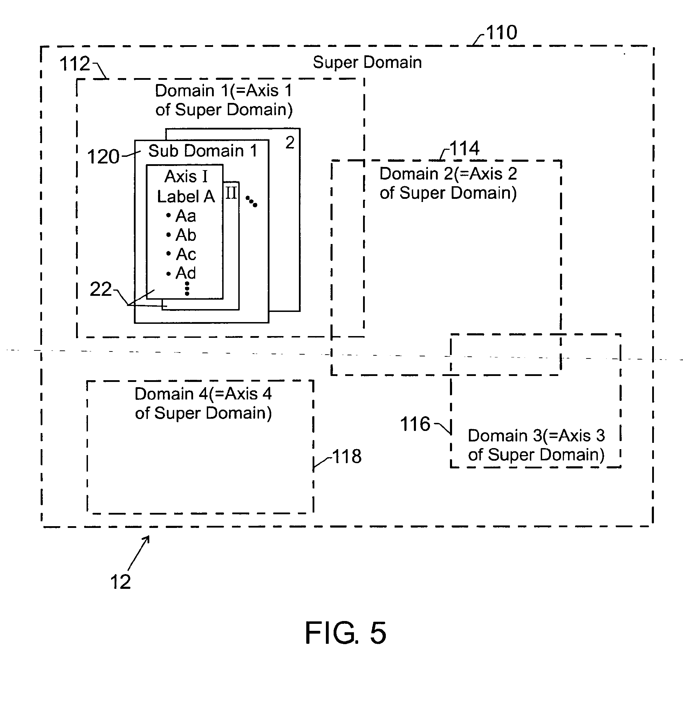

As mentioned above, the conceptual framework represented by the domain definition may include a wide range of levels, and any conceptual subdivision of the levels. FIG. 5 represents an exemplary domain 110, in this case termed a "super domain." The term super domain is employed here to illustrate that the domain itself may be subdivided. That is, many different levels may be provided in the conceptual breakdown in classification. In the illustrated embodiment, four domains are identified in the super domain, including domains 112, 114, 116 and 118. These domains may overlap with one another. That is, certain labels or attributes within the domains may also be found in other domains. In certain cases, however, there may be no overlap between the domains. As indicated in FIG. 5, the domains themselves may be considered as axes of the super domain. At a further conceptual level, each domain may be then subdivided into sub-domains as indicated by sub-domains 120 for domain 112. That is, each domain may conceptually be subdivided so as to classify data entities distinctly within the domain. Ultimately, individual axes are defined, with labels for each axis, and attributes for each label.

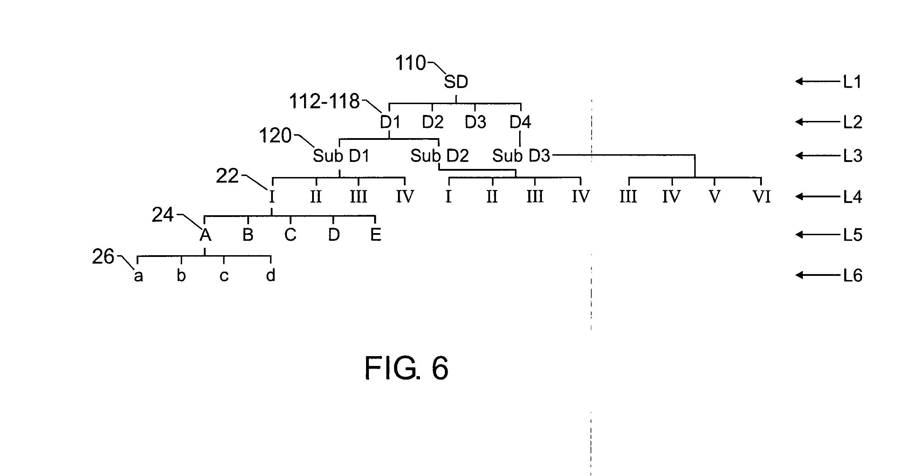

This multi-level approach to the conceptual framework defined by the domain is further illustrated in FIG. 6. FIG. 6 illustrates, in fact, six separate levels of classification and analysis. At a first level L1, the super domain is defined. This super domain 110 is typically the field itself in which the data entities are found. As will be appreciated by those skilled in the art, the field is, in fact, merely a level of abstraction defined by the user. Within the super domain may be found a series of domains 112-118, as indicated at level L2 in FIG. 6. Still further, a level of sub-domains may be identified within each domain, followed by a series of axes, with each axes having individual labels and ultimately attributes of each label, as represented by levels L3-L6. Thus, any number of conceptual levels may be defined for definition of the domain. Based upon the ultimate attributes of the data entities, then, mapping to and classification in corresponding levels and sublevels is accomplished.

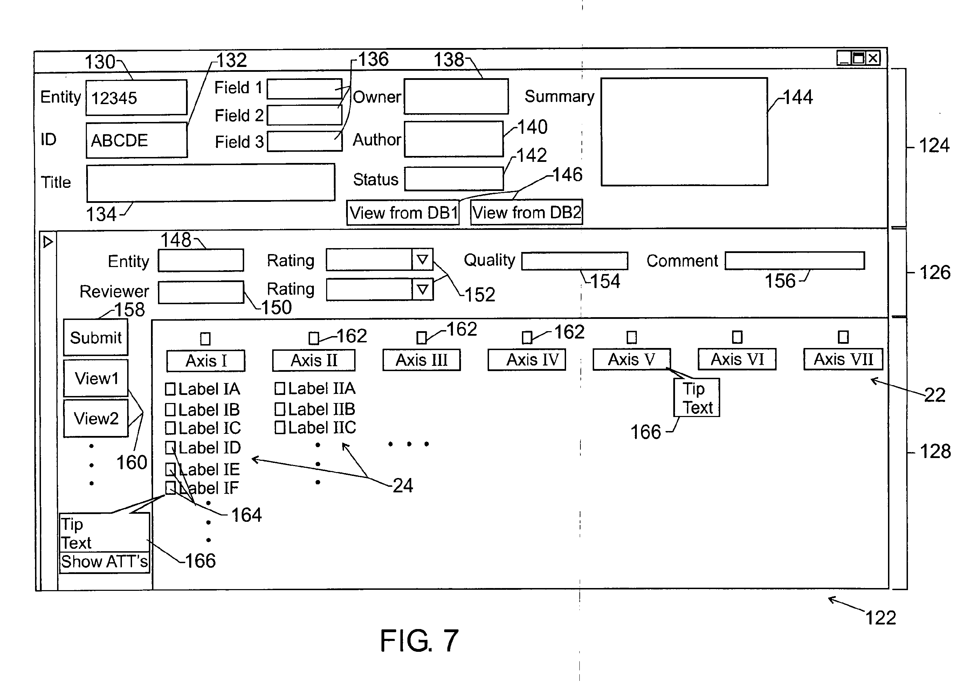

As mentioned above, the present techniques provide for user definition of the domain and its conceptual framework. FIG. 7 illustrates and exemplary computer interface page for defining a domain. By way of example only, in this illustrated implementation the domain includes only the domain level, the axis level, the label level, and associated attributes. The domain definition template indicated by reference numeral 22, may include a bibliographic data section 124, a subjective data section 126, and a classification data section 128, in which the axes and labels are listed.

Where provided, the bibliographic data section 124 enables certain identifying features of data entities to be provided in corresponding fields. It may be noted that such biographical information will typically be textual in nature, even for data entities and features that are not textual. For such entities, the biographical information may relate general provenance, reference, and similar information. For example, an entity field 130 may be provided along with a data entity identification field 132 uniquely identifying, together, the data entity. A title field 134 may also be provided for further identifying the data entity. Additional fields 136 may be provided, that may be user-defined. Data representative of the source or origin of the data entity may also be provided as indicated at blocks 138 and 140. Further information, such as a status field 142 may be provided where desired. Finally, a general summary field 144 may be provided, such as for receiving information such as an abstract of a document, and so forth. Selections 146 or field identifiers may be provided, such as for selecting databases from which data entities are to be searched, analyzed, mapped and classified. As will be appreciated by those skilled in the art, the exemplary fields of the bibliographical section 124 are intended here as examples only. Some or all of this information may be available from structured data entities, or the fields may be completed by a user. Moreover, certain of the fields may be filled only upon processing and analysis of the data entities themselves, or a portion of the entities. For example, such bibliographic information may be found in certain sections of documents, such as front pages of patent documents, bibliographic listings of books and articles, and so forth. Other bibliographic data may be found, for example, in headers of image files, text portions associated with audio files, annotations included in text, image and audio files, and so forth.

The subjective data section 126 may include any of a range of subjective data that is typically input by one or more users. In the illustrated example, the subjective data includes an entity identifying or designating field 148 and a field for identifying a reviewer 150. Subjective rating fields 152 may also be provided. In the illustrated embodiment, a further field 154 may be provided for identifying some quality of a data entity as judged by a reviewer, expert, or other qualified person. The quality may include, for example, a user-input relevancy or other qualifying indication. Finally, a comment field 156 may be included for receiving reviewer comments. It should be noted that, while some or all of the fields in a subjective data section 126 may be completed by human users and experts, some or all of these fields may be completed by automated techniques, including computer algorithms.

The classification data section 128 includes, in the illustrated embodiment, inputs for the various axes and labels, as well as virtual interface tools (e.g., buttons) for launching searches and performing tasks. In the illustrated embodiment, these include a virtual button 158 for submitting a domain definition for searching, analyzing, structuring, mapping and classifying data entities in accordance with the definition. Selection of views for presenting various results or additional interface pages may be provided as represented by buttons 160. A series of selectable blocks 162 are provided in the implementation illustrated in FIG. 7, that permit a user to select one or all of the axes making up the domain definition. Similarly, the user-selectable block 164 provided for each label. Although not illustrated in FIG. 7 in the interest of clarity, all of the axes may include, and typically will include, many different labels. Any number of axes may be provided in the domain definition, and any number of labels may be provided for each axes. Finally, a series of identifiers or tip boxes 166 may be provided that can be automatically viewed or viewable by a user (e.g., by selection of a button on a mouse or other interface device) to facilitate recalling the meaning or scope of individual axes or labels, or for showing attributes of individual labels.

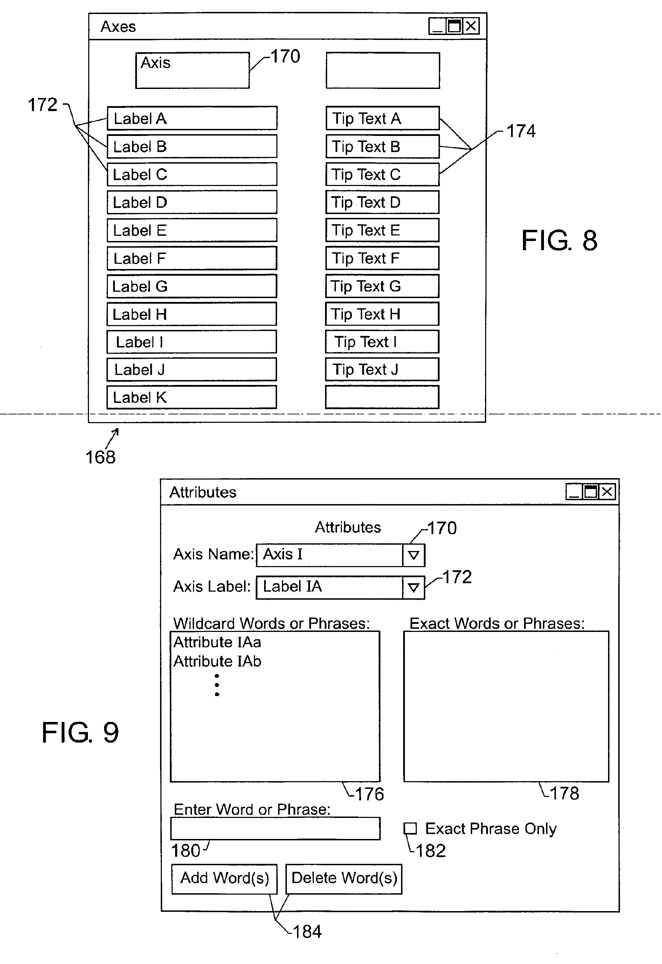

A range of additional interfaces may be provided for identifying and designating the axes and labels. For example, FIG. 8 represents an exemplary interface 168 for defining axes, labels and tip text for each label. In the interface, user may input the axes name in a field 170, and series of label names in field 172 for the axis. The interface 168 further permits the user to input tip text, as indicated at reference numeral 174, which may be used or displayed for the user to remind the user of the meaning of each label or the scope of their label. Similar tip text may, of course, be included for each axis. As noted above, for non-textual axes, labels, and attributes of non-textual features and characteristics, the interface pages may include descriptive text, iconographical representations (e.g., thumbnail representations), and so forth.

Similarly, interface pages may permit the user to define the particular attributes of each label. FIG. 9 represents an exemplary interface page for this purpose. The page displays for the user the individual axis and the label for the axis for which the attributes are to be designated. In the illustrated example, the attributes are attributes of text documents, such that words and phrases may be defined by the user in a listing, such as in a field 176. A further field 178 is provided for exact word or phrases. Depending upon the design of the interface, input blocks, such as block 180 can be provided that permit the user to input the particular word or phrase, with selections, such as selection 182 for selecting whether it is to be a wildcard word or phrase or an exact word or phrase. A wide range of other attribute input interfaces may be envisaged, particularly for different types of data entities and different types of data expected to be encountered in the entity. Finally, blocks can be provided, along with other virtual tools, for adding attributes, deleting attributes, modifying attributes and so forth, as indicated generally at reference numeral 184 in FIG. 9.

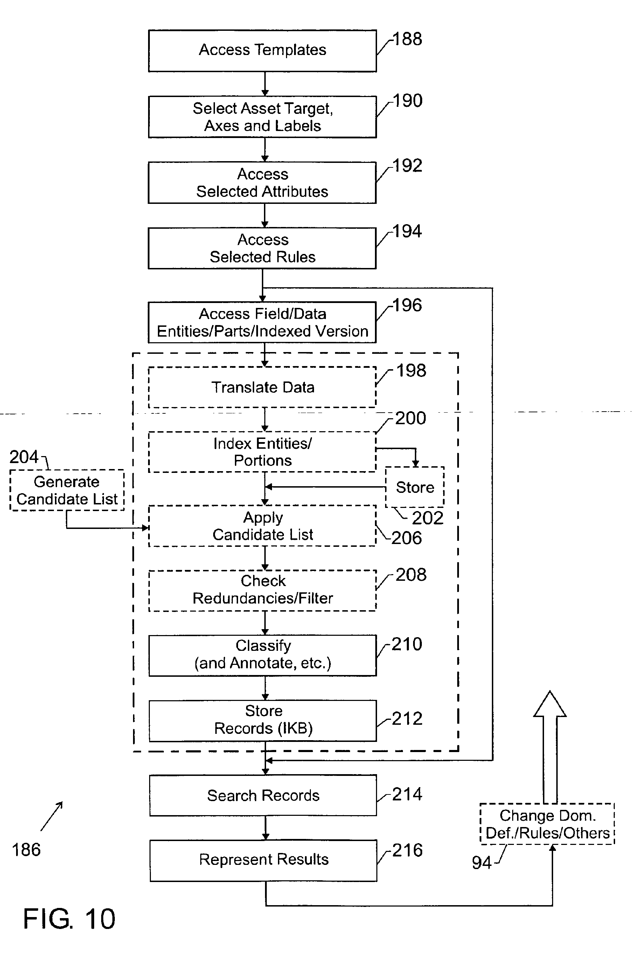

As noted above, the present techniques may be employed for identifying, analyzing, structuring, mapping, classifying and further comparing and performing other analysis functions on a variety of data entities. Moreover, these may be selected from a wide range of resources, including at large sources. Furthermore, the data entities may be processed and stored in an IKB as described above. FIG. 10 represents exemplary logic in performing certain of these operations.

The exemplary logic 186 illustrated in FIG. 10 begins with accessing one or more templates for selection, analysis and classification of the data entities, as indicated at reference numeral 188. In a present implementation, for initial selection and classification of data entities, all axes, labels and attributes of the domain definition are employed in this step. However, as indicated at reference numeral 190, where desired, the user may select a target database or resource for identification and classification of the data entities, along with axes and labels from the template. In the present context, the access mentioned in step 190 are the data entities, and the accessed target is one or more locations in which the entities are found or believed to be located. The accessed target may, for example, include known databases, public access databases and libraries, subscription-based databases and libraries, and so forth. By way of example, when searching for intellectual property rights, such accessed targets may include databases of a patent office. When searching for medical diagnostic images, as another example, the accessed target may include repositories of such images, such as picture archiving and communication systems (PACS) or other repositories. Again, any suitable resource may be employed for this purpose.

Based upon the axes and labels selected at step 190, the selected attributes are accessed at step 192. These attributes would generally correspond to the axes and labels selected, as defined by the user and the domain definition. Again, for initial classification of data entities, such as for inclusion in an IKB, all axes and labels, and their associated attributes may be used. In subsequent searches, however, and where desired in initial searches, only selected attributes may be employed where a subset of the axes and/or labels are used as a search criterion. At step 194 the selected rules and algorithms are accessed. Again, these rules and algorithms may come into play for all analysis and classification, or only for a subset, such as depending upon the search criteria selected by the user via a search template. Finally, at step 196, access is made to the accessed target field, to the data entity themselves, or parts of the data entities or even to indexed versions of the entities. This access will typically be by means of a network, such as a wide area network, and particularly through the Internet. By way of example, at step 196 raw data from the entities may be accessed, or only specific portions of the entities may be accessed, where such apportionment is available (e.g., from structure present in the entities). Thus, for intellectual property rights documents, such as patents, the access may be limited to specific subdivisions, such as front pages, abstracts, claims, and so forth. Similarly, for image files, access may be made to bibliographic information only, to image content only, or a combination of these.

Where the data entities are to be classified in an IKB for later access, reclassification, analysis, and so forth, a series of substeps may be performed as outlined by the dashed lines in FIG. 10. In general, these may include steps such as for translation of data as indicated at reference numeral 198. As will be appreciated by those skilled in the art, because the present tools may be implemented for a wide range of data, the format, content, and a structure of which may not be known, translation of the data may be in order at step 198. Such translation may include reformatting, sectioning, partitioning, and otherwise manipulating the data into a desired format for analysis and classification. Where desired, the entities may be indexed at step 200. Such indexing, as again will be appreciated by those skilled in the art, generally includes subdividing the data entities into a series of sections or portions, with each portion being tagged or indexed for later analysis. Such indexing may be performed on only portions of the entities, where desired. The indexing, where performed, is stored in step 202 to permit much more rapid accessing and evaluation of the indexed data entities for future searches.

A "candidate list" may be employed, where desired, to enhance the speed and facilitate classification of the particular data entities. Where such candidate lists are employed, a candidate list is typically generated beforehand as indicated at step 204 in FIG. 10. The candidate list may generally include the axes and labels, along with associated attributes that are particularly of interest in the targeted data entities. The candidate list may be used to quickly select data entities for inclusion in the IKB when certain simple criteria, such as the presence of a word, phrase, image feature, waveform feature, and so forth is found in the entity. Where such candidate lists are employed, the predefined list is applied in a step 206 to the accessed data entities. Further filtering and checks may be performed in a variety of ways, depending upon the nature of the data entity and the useful filtration that may be implemented. For example, in step 208 illustrated in FIG. 10, the process may call for checking for redundancies and filtering certain documents and other data entities. By way of example, where an IKB has already been established, step 208 may include verification of whether certain records or data entities are already included in the IKB, and elimination of such data entities for preclude redundant records in the IKB. Similarly, where records are found to essentially represent the same underlying information, these may be filtered in step 208. In the example of intellectual property rights, for example, it may be found that a particular patent application has issued as a patent and the patent information as opposed to the application information may be retained and the earlier information rejected at step 208, where desired. A wide variety of checks and verifications may be implemented.

At step 210 the data entities are mapped and classified. The mapping and classification, again, generally follows the domain definition by axis, label and attribute. As noted above, the classification performed at step 210 is a one-to-many classification, wherein any single data entity may be classified in more than one corresponding axis and label. Step 210 may include other functions, such as the addition of subjective information, annotations, and so forth. Of course, this type of annotation and addition of subjective review or other subjective input may be performed at a later stage. At step 210 the data entities, along with the indexing, classification, and so forth is stored in the IKB. It should be appreciated that, while the term "IKB" is used in the present context, this knowledge base may, in fact, take a wide range of forms. The particular form of the IKB may follow the dictates of particular software or platforms in which the IKB is defined. The present techniques are not intended to be limited to any particular software or form for the IKB.

It should be noted that the IKB will generally include classification information, but may include all or part of the data entities themselves, or processed (e.g., indexed or structured) versions of the entities or entity portions. The classification may take any suitable form, and may be a simple as a tabulated association of the structural system of the domain definition with corresponding data entities or portions of the entities.

Following establishment of the IKB, or classification of the data entities in general, various searches may be performed as indicated at steps 214. The arrow leading from step 194 to step 214 in FIG. 10 is intended to illustrate that the searches performed at step 214 may be performed either on data entities stored in an IKB or on data entities that are not stored in an IKB. That is, searches may be performed on at large sources of data entities, including external databases, structured data, unstructured data, and so forth. Where an IKB has been established, however, the accessing step performed at reference numeral 196 leads directly to accessing the IKB and searching the records of the IKB at step 214. At step 216, then, based upon the search defined at step 214, and the associated rules and algorithms, search results are presented. Again, these search results may be presented in a wide range of forms, both including analysis of individual data entities, or the search results may include the data entities themselves in their original form or in some highlighted or otherwise manipulated form.

Based upon any or all of the search results, the selection of data entities, the classification of data entities, or any other feature of the domain definition or its function, the domain definition, the rules, or other aspects of the conceptual framework and tools used to analyze it may be modified, as indicated generally at reference numeral 94 in FIG. 10. That is, if the search results are found to be over inclusive or under inclusive, for example, the domain definition may be altered, as may the rules used for selection of data entities, classification of the data entities or analysis of the entities. Similarly, if the analysis is found to provide an excess of distinctions or insufficient distinctions between the data entities, these may be altered at step 94. Moreover, as new conceptual distinctions are recognized, or new attributes are recognized, such as due to developments in a field, these may result in alternation of the domain definition, the rules and algorithms applied, and so forth. Still further, as new rules and algorithms for classification of the data entities are developed or become available, these may also result in changes at step 94. Based upon such changes, the entire process may be recast. That is, additional searches may be performed, additional data entities may be added to an IKB, new IKBs may be generated, and so forth. Indeed, such changes may simply result in reclassification of data entities already present in an IKB.

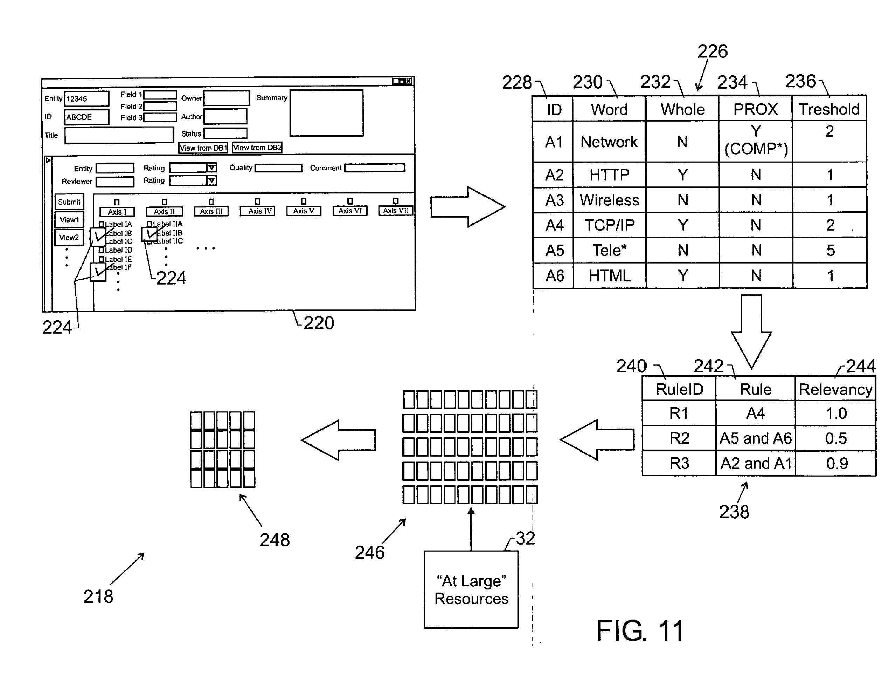

FIG. 11 represents, diagrammatically, the process set forth in FIG. 10 as applied to certain textual data entities for generating an IKB. The IKB generation process, designated generally be reference numeral 218 in FIG. 11, begins with a template 220, which may generally be similar to or identical to the template used to define the domain. As noted above, it may be preferable to initially cast the search for generation of the IKB to include all axes, labels and attributes of the labels. Where desired, however, the template may permit the user to select certain of the axes or labels, as indicated by the enlarged check boxes 224 in the template 220 of FIG. 11. Based upon the selection of some or all of the axes and labels, then, an association list 226 may be employed. The association list 226, in the illustrated example, may include identification of the individual attributes of particular labels, along with user-defined specific attributes and certain selection criteria. In the illustration of FIG. 11, for example, as one example, the particular attributes are words relating to web pages or a similar technical field. The selection criteria in the illustrated example include whether the entire word or less than the entire word is to be used in the identification of the data entities, whether a proximity rating is to be used, as indicated at reference numeral 34, and whether any particular threshold is to be used as indicated at reference numeral 236. As will be apparent to those skilled in the art, even within the field of textual searching and classification, many such selection criteria may be employed. The present techniques are not intended to be limited to any such selection criteria. Moreover, it should also be recognized that the selection criteria may be employed in the form of a quality of the attribute, or such criteria may also be implemented as a rule to be applied to the selection and classification process.

Based upon the domain definition, or a portion of the domain definition as selected by the user, and upon inputs such as the candidate list, where used, rules are applied for the selection and classification of data entities as indicated by reference numeral 238 in FIG. 11. In the simple example illustrated, a rule identifier 240 is associated with various rules 242. Moreover, a relevancy criteria 244 may be implemented for each of the rules in the illustrated example. As noted above, it should be borne in mind that any desired rules may be used for the selection and classification of the data entities. In the case of text documents, these rules may be quite simple. However, for more complex documents, or where text and images, or text and other forms of data are to be analyzed for classification purposes, these rules may combine criteria for selection and analysis of text, as well as selection and analysis of other portions of the data, such as images. As also discussed above, the rules may be included in the code implementing the selection and classification process, or may be linked to the code. Where complex algorithms are employed, for example, for image analysis and classification, such algorithms may be too voluminous or may be used so sparingly as to make linking to the algorithms the most efficient and limitation. Finally, and as also mentioned above, for non-textual documents, the selection and classification rules and algorithms may provide for both the identification of features, and their classification by permitting certain tolerances or other flexibility on the basic definition referred to in the axis, label or attribute.

Based upon the domain definition, any candidate lists, any rules, and so forth, then, at large resources 32 may be accessed, that include a large variety of possible data entities 246. The domain definition, its attributes, and the rules, then, permit selection of a subset of these entities for inclusion in the IKB, as indicated at reference numeral 248. In a present implementation, not only are these entities are selected for inclusion in the IKB, but additional data, such as indexing where performed, analysis, tagging, and so forth accompany the entities to permit and facilitate their further analysis, representation, selection, searching, and so forth.

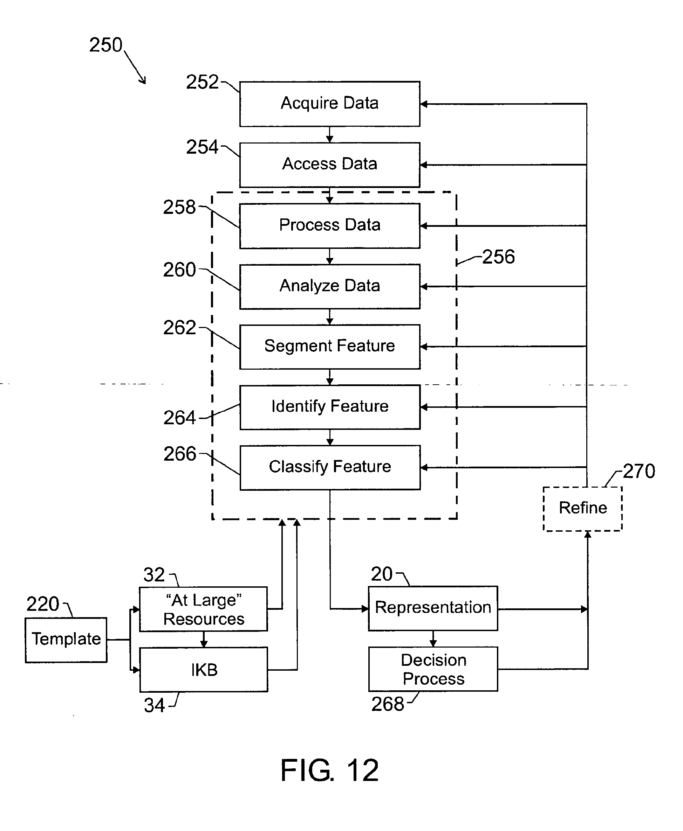

The analysis performed on the selected and classified data entities may vary widely, depending upon the interest of the user and upon the nature of the data entities. Moreover, even prior to the classification, during the classification, and subsequent to the initial classification, additional analysis and classification may be performed. FIG. 12 illustrates generally logic for computer-assisted processing, analysis and classification of features of interest in the data entities. This logic, designated generally by reference numeral 250 may be said to begin with the acquisition of the data contained in each entity. As noted above, the present process generally assumes that such acquisition is performed *a priori.* However, based upon certain analysis and classification, the present techniques may also recommend that additional data entities be created by acquiring additional data. At step 254, the data is accessed as described above. Subsequent processing via computer-assisted techniques follows access of the data, as indicated generally at reference numeral 256 in FIG. 12.

As noted above, the present technique provides for a high level of integration of operation in computer-assisted searching, analysis and classification of data entities. These operations are generally performed by computer-assisted data operating algorithms, particularly for analyzing and classifying data entities of various types. Certain such algorithms have been developed and are in relatively limited use in various fields, such as for computer-assisted detection or diagnosis of disease, computer-assisted processing or acquisition of data, and so forth. In the present technique, however, an advanced level of integration and interoperability is afforded by interactions between algorithms for analyzing and classifying newly located data entities, and for subsequent analysis and classification of known entities, such as in an IKB. The technique makes use of unprecedented combinations of algorithms for more complex or multimedia data, such as text and images, audio files, and so forth.

FIG. 12 provides an overview of interoperability of such algorithms, which may be referred to generally in the present context as computer-assisted data operating algorithms or CAX. Such CAX algorithms in the present context may be built upon algorithms presently in use, or may be modified or entirely constructed on the basis of the additional data sources and entities, integration of such data sources and entities, or for search analysis and classification of specific types of data entities. In the overview of FIG. 12, for example, an overall CAX system is illustrated as included a wide range of steps, processes or modules which may be included in a fully integrated system. As noted above, more limited implementations may also be envisaged in which some or a few only of such processes, functions or modules are present. Moreover, in presently contemplated embodiment, such CAX systems may be implemented in the context of an IKB such that information can be gleaned to permit adaptation or optimization of both the algorithms themselves and the data management by the data managed by the algorithms for analysis and classification of the data entity. Various aspects of the individual CAX algorithms may be altered, including rules or processes implemented in the algorithms, or specific rules may be written and called upon during the data entity mining, analysis and classification processes.

While many such computer-assisted data operating algorithms may be envisaged, certain such algorithms are illustrated in FIG. 12 for carrying out specific functions on data entities, with these processes being designated generally by reference numeral 256. Considering in further detail the data operating steps summarized in FIG. 12, at step 258 accessed data is generally processed, such as for indexing, redundancy checking, reformatting of data, translation of data, and so forth. As will be appreciated by those skilled in the art, the particular processing carried out in step 258 will depend upon the type of data entity being analyzed and the type of analysis or functions being performed. It should be noted, however, that data entities may be processed from any of the sources discussed above, including at large sources and IKBs. At step 258, similarly, analysis of the data entities is performed. Again, such analysis will depend upon the nature of the data entities, the data in the entities, and the nature of the algorithm on which the analysis is performed. Such processing may identify, for example, certain similarities or differences within or between entities. Such data may then be tabulated, counted, and so forth for presentation. Similarly, statistical analyses may also be performed on the data entities, to determine such relationships as relevancy, degree of similarity, or any other feature of interest both within the entities or between or among entities.

Following such processing and analysis, at step 260 features of interest may be segmented or circumscribed in a general manner. Recognition of features in textual data may include operations as simple as recognizing particular passages and terms, highlighting such passages and terms, identification of relevant portions of documents, and so forth. An image data, such feature segmentation may include identification of limits or outlines of features and objects, identification of contrast, brightness, or any number of image-based analyses. In a medical context, for example, segmentation may include delimiting or highlighting specific anatomies or pathologies. More generally, however, the segmentation carried out at step 260 is intended to simply discern the limits of any type of feature, including various relationships between data, extents of correlations, and so forth.

Following such segmentation, features may be identified in the data as summarized at step 262. While such feature identification may be accomplished on imaging data in accordance with generally known techniques, it should be borne in mind that the feature identification carried out at step 262 may be much broader in nature. That is, due to the wide range of data which may be integrated into the inventive system, the feature identification may include associations of data, such as text, images, audio data, or combinations of such data. In general, the feature identification may include any sort of recognition of correlations between the data that may be of interest for the processes carried out by the CAX algorithm. At step 266 such features are classified. Such classification will typically include comparison of profiles in the segmented feature with known profiles for known conditions. The classification may generally result from attributes, parameter settings, values, and so forth which match profiles in a known population of data sets with a data set or entity under consideration. The profiles, in the present context, may correspond to the set of attributes for the axes and labels of the domain definition, or a subset of these where desired. Moreover, the classification may generally be based upon the desired rules and algorithms as discussed above. The algorithms, again, may be part of the same software code as the domain definition and search, analysis and classification software, or certain algorithms may be called upon as needed by appropriate links in the software. However, the classification may also be based upon non-parametric profile matching, such as through trend analysis for a particular data entity or entities over time, space, population, and so forth.

As indicated in FIG. 12, the processes carried out during the analysis and classification may be based upon either at large resources 32 or data entities stored in an IKB as indicated at reference numeral 34. As also noted in FIG. 12, these processes may be driven by input via a template 220 of the type described above. As a result of the analysis and classification, a representation is generally represented to the user as indicated at reference numeral 20.

The present techniques for searching, identification, analysis, classification and so forth of data entities is specifically intended to facilitate and enhance decision processes. The processes may include a vast range of decisions, such as marketing decisions, research and development decisions, technical development decisions, legal decisions, financial and investment decisions, clinical diagnostic and treatment decisions, and so forth. These decisions and their processes are summarized at reference numeral 268 in FIG. 12. As discussed above, based upon the representations 20, and additionally based the decision making processes, further refinements to the analysis and classification algorithms, the data entities, the domain definition, and so forth may be in order, as indicated at optional block 270 in FIG. 12. As will be appreciated by those skilled in the art, such refinement may include, but certainly not limited to, the acquisition of additional data, the acquisition of data under different conditions, particular additional analysis of data, further segmentation or different segmentation of the data, alternative identifications of features, and alternative classifications of the data.

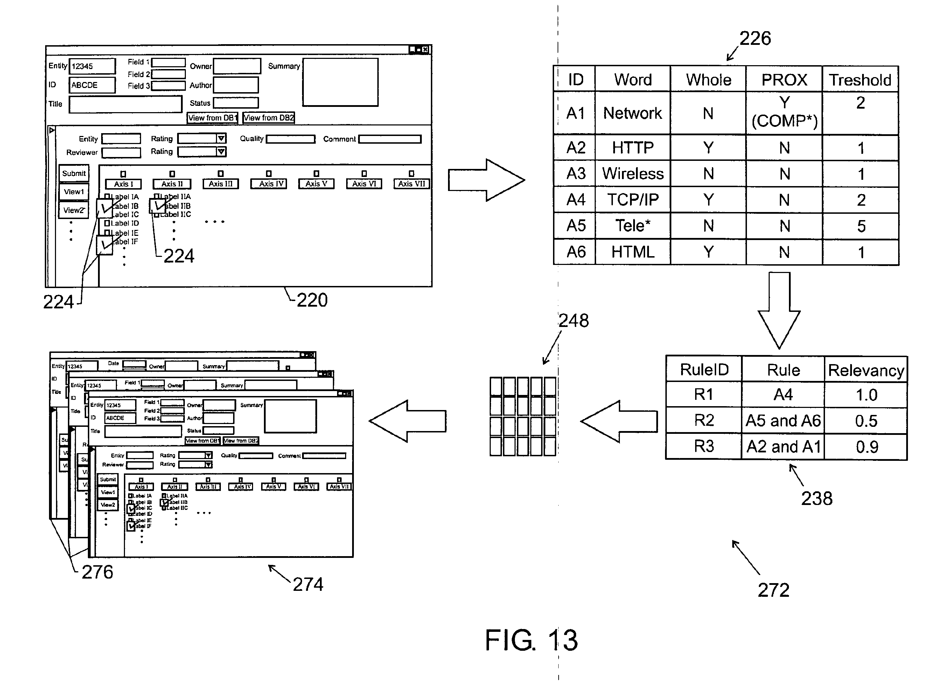

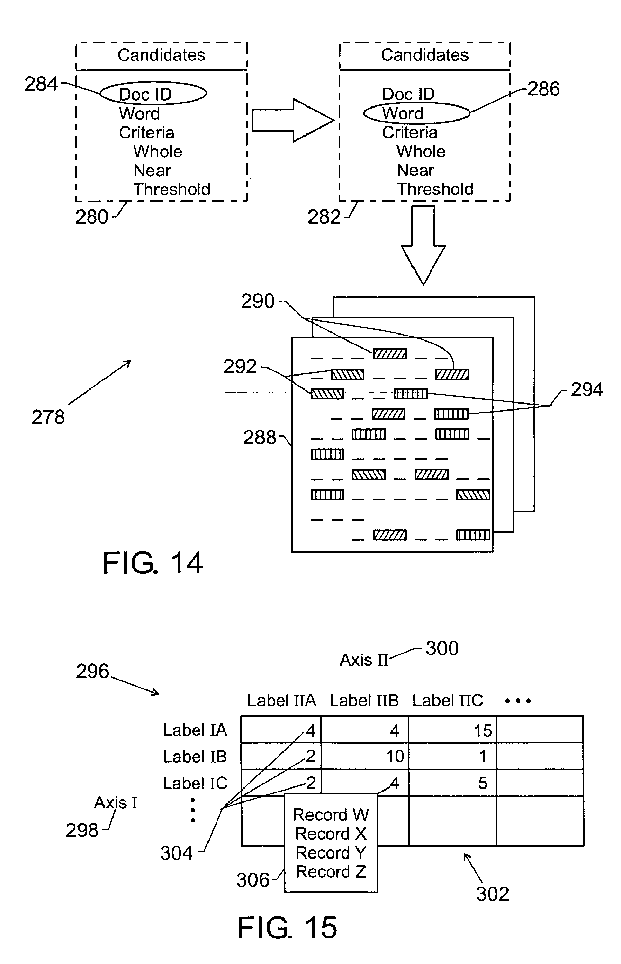

As noted above, additional interfaces are provided in the present technique for performing searches arid further identification and classification of data entities, such as from an IKB. FIG. 15 illustrates an overview for performing searches of data entities, such as entities stored in an IKB. It would be noted that the overview is similar to that illustrated in FIG. 11 in which data entities are searched and structured for formation of the IKB. In the workflow illustrated in FIG. 13, designated generally by reference numeral 272, a search form 220 is again employed that includes a graphical illustration of the domain definition, including the axes and labels. Again, attributes and, where appropriate, association lists may be combined with the search template to define the features of the data entities which are to be searched and classified. An association list 226, may thus be used for automated search and classification. The user, then, may define the particular axes and labels which are to be located in the structured data entities comprising the IKB via the completed template 220. Based upon the completed template, the association list 226, and rules, designated generally by reference numeral 238, the IKB is searched. That is, selected and classified entities 248 are searched to identify and reclassify, where appropriate, the data entities that correspond to the criteria used for the search (as defined by the template, any association list, and the rules applicable). In the embodiment illustrated in FIG. 13, the search results are returned via a form that resembles the search template. However, in the representation, designated here as a "form view" 274, only the axes and labels located for each record or data entity are highlighted in the template. Thus, the user can quickly identify the bases for the one-to-many mapping performed in the classification procedure. A number of such records 276 may be returned, with each indicating, where desired, a bibliographic data, subjective data, classification data, and so forth as discussed above.

In another implementation, data entities may be highlighted for specific features or attributes located in the search and analysis steps, and classified into the structured data entity. FIG. 14 illustrates an exemplary workflow for one such implementation.

The text highlighting implementation of FIG. 14, designated generally by reference numeral 278, may begin with identification of specific features of candidates from a candidate list 280. The candidate selections, indicated by reference numeral 282 are made from the list, and efficient searches may be carried out for highlighting individual features of interest. In the implementation illustrated in FIG. 14, for example, a text search is performed on a document ID field 284, with words being highlighted as indicated at reference numeral 286. Individual words, which may correspond to individual attributes of labels in the domain definition, will thus be highlighted as indicated in the entity record view 288 of FIG. 14. In a present implementation, the highlighting may be done by changing a word color or a background color surrounding a word. Different highlighting, as indicated by reference numerals 290, 292 and 294 are used for different terms, or, for example, for terms associated with a single label, or single axis. Here again, the basis for the classification (and selection) of the data entities can be readily apparent to the user by reference to the highlighting. As will be noted by those skilled in the art, while the relatively straightforward example of a text document as illustrated, similar techniques may be used on a wide range of data entity types. For example, as discussed below, image data, audio data, or other data, and combinations of these types of data may be analyzed and highlighted in similar manners. Where image data is highlighted, for example, graphical techniques may be employed, such as blocks surrounding features of interest, pointers indicating features of interest, annotations indicating features of interest and so forth. Where data entities including text, image, and other types data are analyzed, combinations of these highlighting approaches may be used.

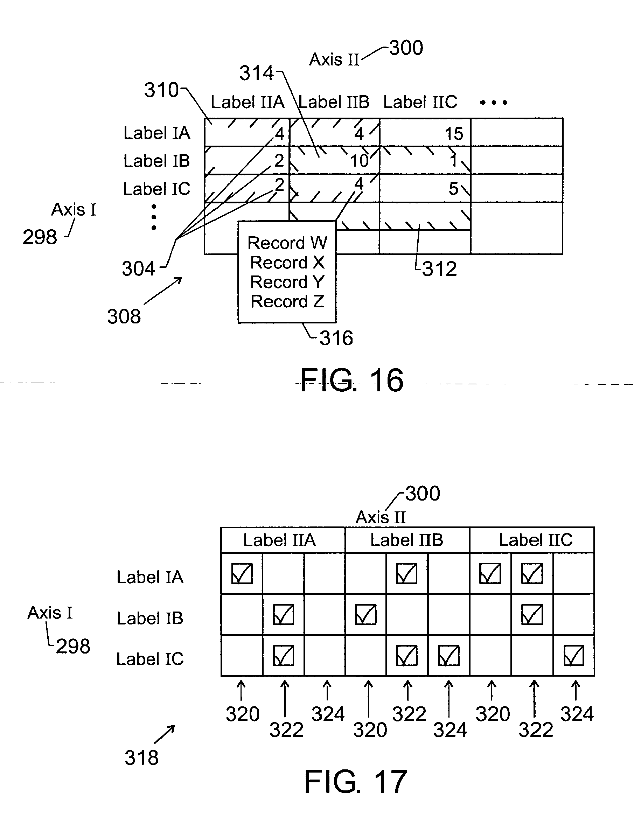

Further representations which may be used to evaluate the analyzed and classified data entities include various spatial displays, such as those illustrated in FIGS. 15-22. In the spatial display (or splay) illustrated in FIG. 16, a data-centric view of a series of records corresponding to search criteria and classified in accordance with the search criteria are viewed. The spatial display 296 takes the form of a matrix or array of data indicating a pair of axes 298 and 300 of the domain definition. The tabulated summary 302 follows these axes and the individual labels of each axis. A count or number of records or data entities corresponding to intersections of the axes and individual labels is indicated by a count or score number 304. Additional information may, of course, be displayed in each intersection block, as discussed in greater detail below. Where desired, additional information may be displayed, such as by clicking a mouse on a count to produce a drop-down menu or list, as indicated at reference numeral 306. It should be borne in mind that the illustrated example is one of many possibilities only. Additional possibilities are discussed below, and be formally a part of the myriad of options available to the system designer. In a present implementation, for example, additional links may be provided to the individual entities or records from the listing 306, with the records themselves available from the listing. Selection of records from the listing may result in display of a form view such as shown in FIG. 13 or a highlight view as indicated in FIG. 14, or any similar representation of all or part of the data entity.

A further example of a spatial display as illustrated in FIG. 16. The display illustrated in FIG. 16 may be considered a record-centric spatial display 308. The record-central display is similar to the display illustrated in FIG. 15, but highlights intersections of labels corresponding to attributes of individual data entities or records. That is, for example, a number of records returned for a specific search criteria, such as a company owner of a particular intellectual property right, may be highlighted in a first color or graphic, as indicated by the right-slanted hatches in FIG. 16. Records corresponding to data entities returned for a second company may be indicated in a different manner, such as the left-slanted hatches. Of course, other graphical techniques, such as colors, where available, may be more indicative and apparent. Here again, the highlighting may indicate that at least one record in each of the intersection blocks was located for each of the highlighted features (e.g., a company owner). The spatial display thus make readily apparent where intersections exist between data entities returned having the attributes, and areas where no such records were returned. The specific record highlighting, indicated by reference numerals 310 and 312, may thus overlap, as in the case of the two central blocks in the intersection space 314, indicating that at least one record in each such block belongs to one or the other basis for the highlighting. Here again, additional graphical or analytical techniques may be employed, such as record listings 316, from which specific records or view may be accessed.

FIG. 17 represents an additional spatial display, which may be thought of as a different type of record-centric display. In the display of FIG. 17, axes 298 and 300 are again indicated, with corresponding labels for each axis. Blocks illustrating the intersections of each label are then provided. In the spatial display presentation 318, however, separate blocks for each individual record or data entity may be provided. Such blocks are indicated at reference numerals 320, 322 and 324. Based upon the content of the structured data entity, then, the individual intersection blocks may indicate whether a record contains the axis label attributes or not. For example, in the illustrated data, the data entities 320, 322 and 324 share no attributes corresponding to label IIA, but entities 322 and 324 share an intersection at label IC/IIB. Here again, the presentation of the data facilitates identification of the uniqueness or distinctiveness of data entities, and their similarities.

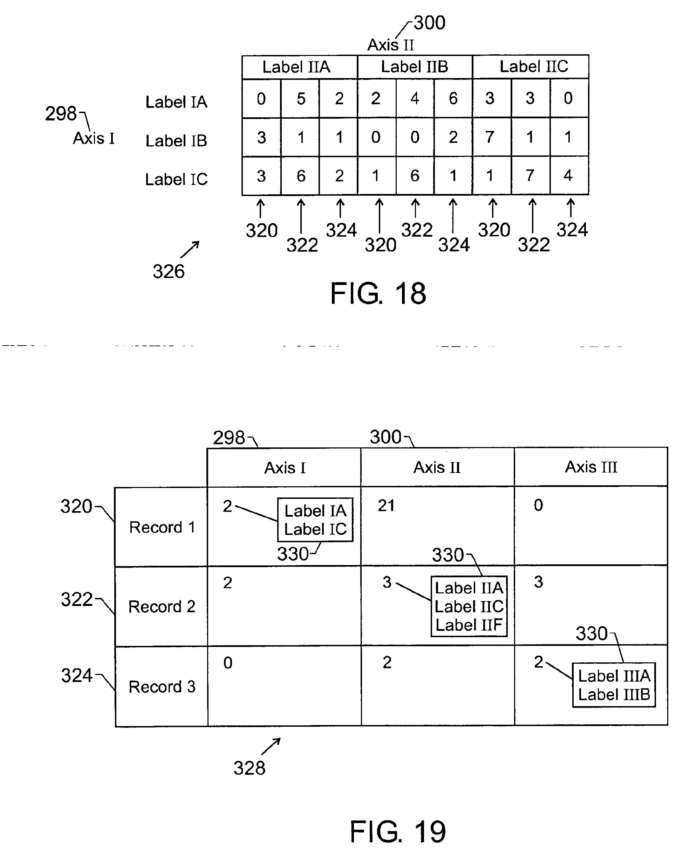

A somewhat similar spatial display is illustrated in FIG. 18. A spatial display of the type illustrated in FIG. 18 may be considered for specific features of interest, such as a company owner of a particular property right. Any other suitable feature, may, of course, be used for generating the display. As illustrated, axes and labels are again indicated in a tabulated form, but with the specific features of interest being called out in individual intersection blocks as indicated at reference numerals 320, 322 and 324. By way of example, in the case of company comparisons, each of the columns 320, 322 and 324 may correspond to the number of properties in each of the intersection blocks owned by each of the companies. Analysis is therefore apparent for the viewer, indicating strengths and weaknesses on a relative basis of each company owner. By way of example, in the illustrated example, company 322 would appear somewhat dominant in the intersection space IC/IIB, but weak, along company 320, in the intersection space IB/IIB.

A further illustrative example of a spatial display is shown in FIG. 19. FIG. 19 may be considered a different type of record or data entity-centric view. Here again, axes 298 and 300 are indicated. A number of data entities or records 320, 322 and 324 are also indicated in a tabulated form. Here, however, for the axes 298, 300 and any additional axes 330, individual labels for which classification was made based on the content of the data entities is illustrated, with all such correspondence as indicated. Thus, the user can readily discern how and why certain records were returned, how certain records were structured and classified, and the basis for the one-to-many mapping of each data entity record.

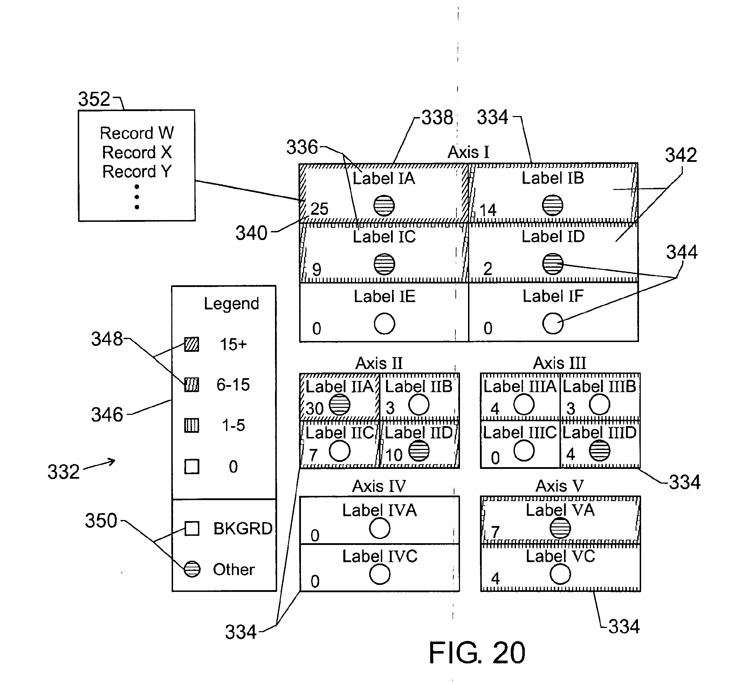

A further example of a spatial display is shown in FIG. 20. In the representation of FIG. 20, the spatial display 332 illustrates in a tiled-format graphical spaces corresponding to each axis 334 of the domain definition, with the individual labels 336 being called out for each axis. Each label is displayed in a block or area 338. In the illustrated example, a count or cumulative total 340 for the number of data entities corresponding to the attributes of each label is provided in the respective block. A background designated generally by reference numeral 342 may be colored or a particular graphic may be used for the background to indicate a level or number of data entities corresponding to the attributes of the individual labels. Moreover, in the illustrated example, an inset 344 is provided that may have a special meaning, such as data entities corresponding to a specific feature, such as a company owner of an intellectual property right. Here again, any other suitable meaning may be attributed to either the background or to the inset 344. Moreover, many such insets, or other graphical tools may be used for calling out the special features of interest.

A legend 346 is provided in the illustrated example for the particular color or graphic used to enhance the understanding of the presented data. In the illustrated example, for example, different colors may be used for the number of data entities corresponding to the attributes of specific labels, with the covers being called out in insets 348 of the legend. Additional legends may be provided, for example, as represented at reference numeral 350, for explaining the meaning of the backgrounds and the insets for each label. Thus, highly complex and sophisticated data presentation tools, incorporating various types of graphics, may be used for the analysis and decision making processes based upon the classification of the structured data entities. Where appropriate, as noted above, additional features, such as data entity record listings 352 may be provided to allow the user to "drill down" into data entities corresponding to specific axes, labels, attributes or any other feature of interest.

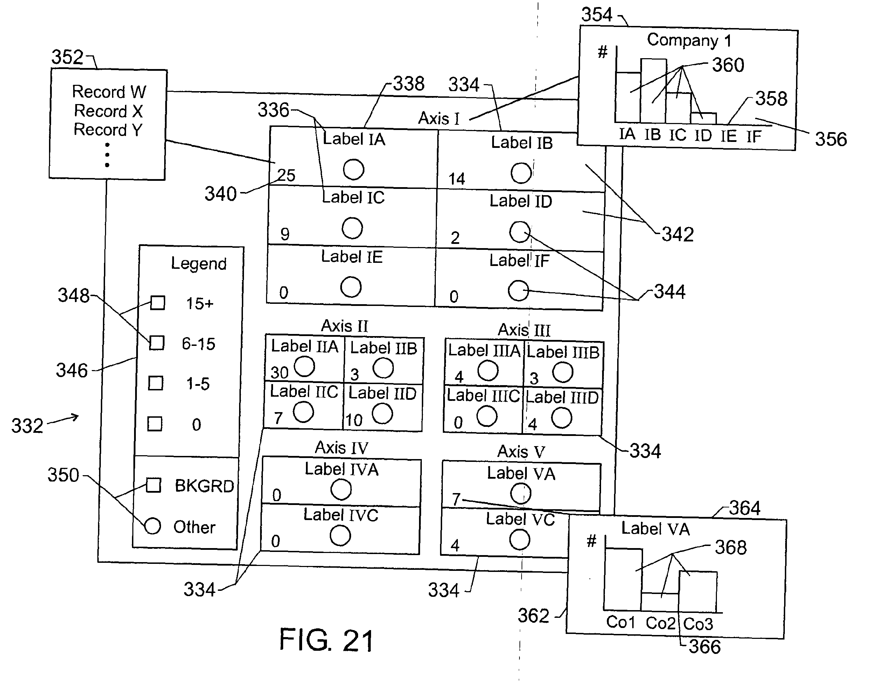

FIG. 21 illustrates the basic spatial display of FIG. 20, with additional illustrative graphics associated. In the illustration of FIG. 21, for example, graphical representations of a number of specific features may be shown, such as insets or menus, graphics, linked displays, and so forth, for classifying the individual data entities by counts, such as of company owners, or any other feature of interest. In the inset of 354, for example, a user may display the number of data entities in a graphical format 356 corresponding to individual labels of the first axis I. As illustrated, for example, a company of interest ("Company 1 ") is illustrated to have a number of data entities corresponding to individual labels IA-IF, with counts of individual data entities or records being displayed in a graphical bar chart in which the number or account of data entities is indicated for each individual label shown along an axis 358. The counts may be represented by the bars 360 in this example. Similarly, as indicated by the graphical display 362 in FIG. 21, for an individual label, then, a number of data entities may be displayed for different companies (e.g., "Co1," "Co2," "Co3"). The company designations may be indicated along an axis 366, then, with the counts being indicated by bars 368. The graphical representation 364 provides an indication, then of the number of properties owned by each company for an individual label. Here again, any other feature may be provided for such analysis and display.

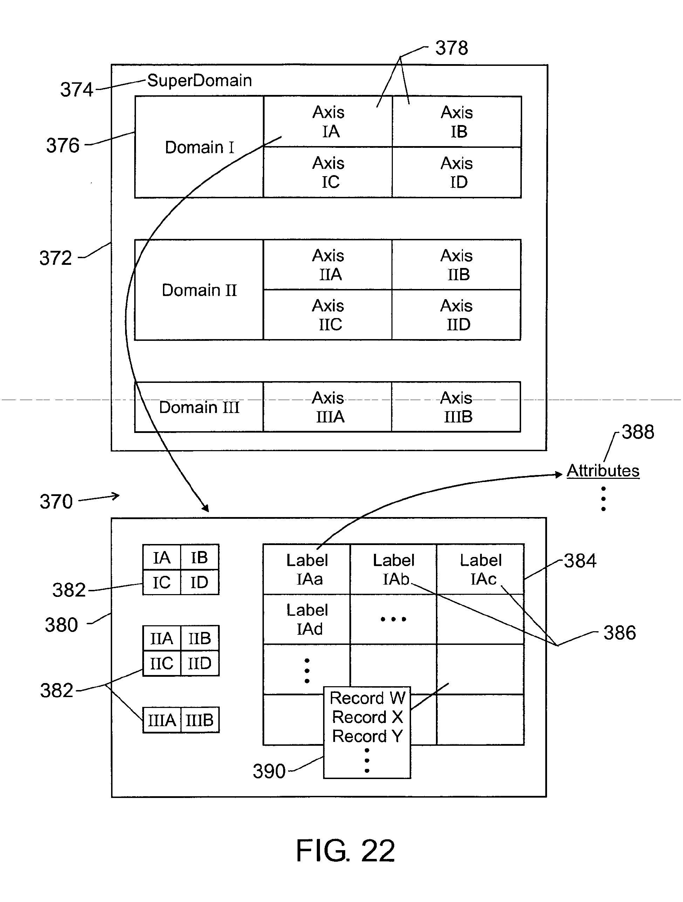

FIG. 22 shows an example of an interactive spatial display of representation of an analyzed and classified data entities, such as may be implemented through an interactive computer interface. The interactive representation 370 includes a top level view, of a superdomain 374 in the illustrated example. As noted above, such designations may be somewhat arbitrary, and indicate simply levels of classification as defined for the data entities. As shown in FIG. 22, the superdomain includes several individual domains 376, with each domain including a series of axes 378. As noted above, in the definition of the superdomain and of the domains, each axis will be associated with individual attributes or features of interest by which the structure data entities will be analyzed and classified. Upon being presented with the graphical illustration superdomain, then, a user may "drill down" into individual domains or axes as indicated by the view 380. In the illustrated implementation, by selecting axis IA, the view 380 is produced in which the individual labels of the selected axis are displayed in an expanded inset 384. The inset illustrates the labels as indicated at reference 386, and additional information, such as counts or cumulative numbers of data entities corresponding to the labels may be displayed (not shown in FIG. 22). Here again, each of the labels will be associated with attributes as indicated by reference numeral 388 in FIG. 22. The attributes may or may not be displayed along with the labels, but the attributes may be accessible to the user as an indication of the basis for which selection and classification of data entities was made. In the implementation of FIG. 22, again, the individual axes of the other domains may be collapsed as indicated at reference numeral 382. As noted with respect to the other spatial displays above, other graphics, such as record listings 390 may be provided to permit the user to view data entities, portions of data entities, summaries of data entities, and so forth. Other types of graphical representations may, of course, be provided, such as the charted, tabulated or highlighted views summarized above.

As mentioned throughout the foregoing discussion, the present techniques may be employed for searching, classifying and analyzing any suitable type of data entity. In general, several types of data entities are presently contemplated, including text entities, image entities, audio entities, and combinations of these. That is, for specific text-only entities, word selection and classification techniques, and techniques based upon words and text may be employed, along with text indicating by graphical information, subjective information, and so forth. For image entities, a wide range of image analysis techniques are available, including computer-assisted analysis techniques, computer-assisted feature recognition techniques, techniques for segmentation, classification, and so forth.

In specific domains, such as in medical diagnostic imaging, these techniques may also permit evaluation of image data to analyze and classify possible disease states, to diagnose diseases, to suggest treatments, to suggest further processing or acquisition of image data, to suggest acquisition of other image data, and so forth. The present techniques may be employed in images including combined text and image data, such as textual information present in appended bibliographic information. As will be apparent to those skilled in the art, in certain environments, such as in medical imaging, headers appended to the image data, such as standard DICOM headers may include substantial information regarding the source and type of image, dates, demographic information, and so forth. Any and all of this information may be analyzed and thus structured in accordance with the present techniques for classification and further analysis. Based upon such analysis and classification, the data entities may be stored in a knowledge base, such as an integrated knowledge base or IKB, in a structured, semi-structured or unstructured form. As will be apparent to those skilled in the art, the present technique thus allow for a myriad of adventageous uses, including the integrated analysis of complex data sets, for such purposes as financial analyses, recognitions of diseases, recognitions of treatments, recognitions of demographics of interest, recognitions of target markets, recognitions of risk, or any other correlations that may exist between data entities but are so complex or unapparent as to be difficult otherwise to recognize.

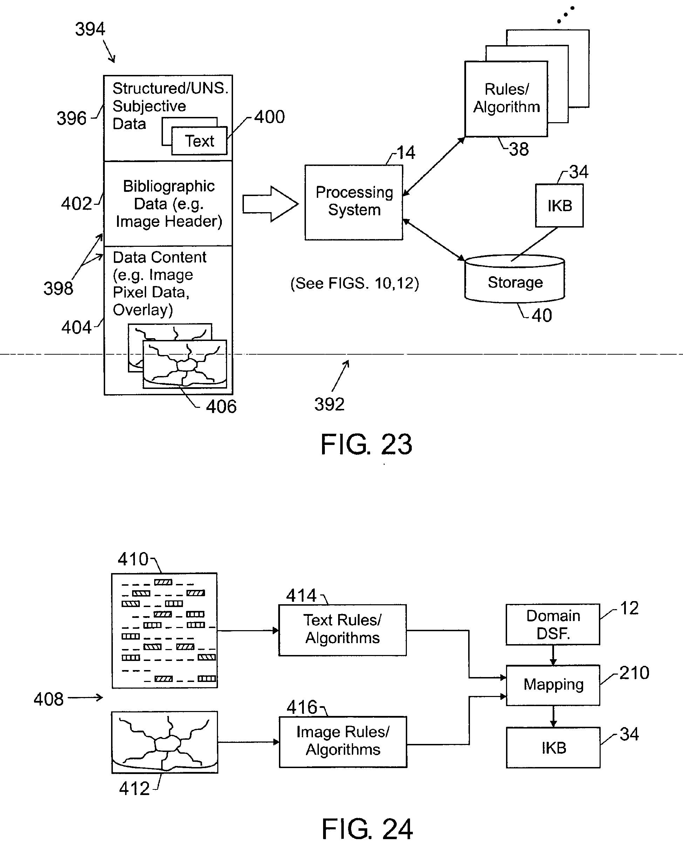

FIGS. 23, 24 and 25 illustrate application of the foregoing techniques to image data, and particularly to image data associated with text data. As shown in FIG. 23, the image/text entity processing system 392 generally follows the outlines of the techniques described above, but may begin with image and text files as indicated at reference numeral 394. Here again, the data entities corresponding to the files may be included in a single file or in multiple files, or links between files may be provided, such as for annotations based upon image data, and so forth. In general, each entity will include, then, a textual segment 396 and a image segment 398. The textual segment 396 may include structure, unstructured or subjective data in the form of one or more strings of text 400. The image segment 398 may include bibliographic data 402, such as text data in an image header, and image content data 404. Image content data will typically be in the form of image pixel data, voxel data, overlay data, and so forth. In general, the image data 404 may generally be sufficient to permit the reconstruction of visual images 406 or series or images for display in accordance with desired reconstruction techniques. As will be apparent to those skilled in the art, the particular reconstruction technique may generally be selected in accordance with the nature of the image data, the type of imaging system from which the data was acquired, and so forth.

The data entities are provided to a processing system 14 of the type described above. In general, all of the processing described above, particularly that described with respect to FIGS. 10 and 12, may be performed on the complex data entities. In accordance with these processing techniques, specific feature of interest, both in the text, in the images, and between the text and the images may be segmented, identified, filtered, processed, classified and so forth in accordance with the domain definition and the rules or algorithms defined by the domain definition as indicated at reference numeral 38. Based upon the processing performed on the complex data entities, then, resulting structured data may be stored in any suitable storage 40, and an integrated knowledge base or IKB may be generated as indicated at reference numeral 34. As also noted above, based upon the one-to-many mapping performed for each of the data entities, similar searches may be performed for individual features of interest in either the text, the images, or both. While FIG. 23 represents text and image files in the complex data entities, it should also be noted that the data entities may include text and audio data, audio data and image data, text and audio and image data, or even additional types of data, such as waveform data, or data of any other type.

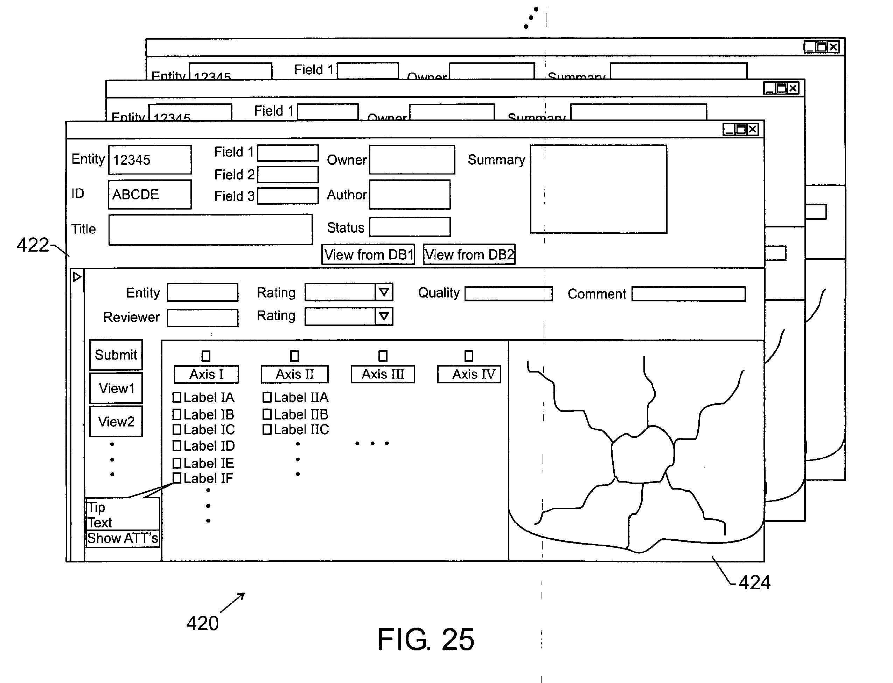

The specific image/text entity processing 408 performed on complex data entities is generally illustrated in FIG. 24. As noted above, text data 410 (shown in FIG. 24 in a highlight view) and image data 412 is analyzed and classified in accordance with individual text rules an algorithms 414 and individual image rules and algorithms 416. It should be noted, however, that certain of the rules and algorithms for classification and mapping may include criteria based upon text and image data. For example, the user may have a particular interest in particular anatomical features of interest visible in image data but for a specific group of subjects as discernable only from the text analysis. Such combined analysis provides a powerful tool for enhanced classification and mapping. Based, then, upon the domain definition 12, the mapping is performed as indicated at block 210 in FIG. 24 to provide results which may be, then, stored in an IKB 34. In addition to analysis and classification of complex data entities, all of the techniques described above may be used for complex data entities, including text, image, audio, and other types of data as indicated generally in FIG. 25. FIG. 25 shows an exemplary form view for combination text/image data similar to that described above for text data alone. In the summaries provided in views 420, shown in FIG. 25, bibliographic information may be provided along with subjective information and classification information, all designated generally by reference numeral 422. Here, however, additional information on analysis of the image data may be provided, along with image representations, such as indicated at reference numeral 424. Where appropriate, links to actual images, annotated images or additional subjective or bibliographic data may, of course, be provided.

As noted above, the present techniques may be applied to any suitable data entities capable of analysis and classification. In one exemplary implementation the technique is applied to researching, analyzing, structuring and classifying patent documents and applications. Such documents, particularly when accessed from commercially available collections, include structure, such as subdivision of the documents into headings (e.g., title, abstract, front page, claims, etc.). For identification and classification of documents of interest, the relevant data domain is first defined. Axes may pertain to subject matter or technical fields, such as imaging modalities, clinical uses for certain types of images, image reconstruction techniques, and so forth. Labels for each axis then subdivide the axis topic to form a matrix of technical concepts. Words, terms of art, phrases, and the like are then associated with each label as attributes of the label. Rules and algorithms for recognition of similar terms are established or selected, including proximity criteria, whole or part word rules, and so forth. Any suitable text analysis rules may be employed.

Based upon the domain definition and the rules, patent and patent application files are accessed from available databases. Structure in the documents may be used, such as for identification of assignees, inventors, and so forth, if such structure is implemented in the domain definition. Structure present in the documents that is not used by the domain definition may be used, such as to complete bibliographical data fields, or may be ignored if not deemed relevant to the domain definition. Data in the documents that is not structured may, on the other hand, be structured, such as by identifying terms in sections of the documents that are found in generally unstructured areas (e.g., paragraph text, abstract text, etc.). To facilitate later searching and classification, the documents may be indexed as well.

The documents are then mapped onto the domain definition to establish the one-to-many classification. This classification may place any particular document in a number of different axis/label associations. Many rich types of analysis may then be performed on the documents, such as searches for documents relating to particular combinations of topics, documents assigned to particular title-holders, and combinations of these. The matrix of axes and labels, with the associated terms and attributes, permits a vast number of subsets of the documents to be defined by selection of appropriate combinations of axes and/or labels in particular searches.

In another exemplary implementation, medical diagnostic image files may be classified. Such-files-typically-include both image data and bibliographic data. Subjective data, annotations by physicians, and the like may also be included. In this example, a user may define a domain having axes corresponding to particular anatomies, particular disease states, treatments, demographic data, and any other relevant category of interest. Here again, the labels will subdivide the axes logically, and attributes will be designated for each label. For text data, the attributes may be terms, words, phrases, and so forth, as described in the previous example. However, for image data, a range of complex and powerful attributes may be defined, such as attributes identifiable only through algorithmic analysis of the image data. Certain of these attributes may be analyzed by computer aided diagnosis (CAD) and similar programs. As noted above, these may be embedded in the domain definitions, or may be called as needed when the image data is to be analyzed and classified.

It should be noted that in this type of implementation, text, image, audio, waveform, and other types of data may be analyzed independently, or complex combinations of classifications may be defined. Where entities are classified by the one-to-many mapping, then, rich analyses may be performed, such as to locate populations exhibiting particular characteristics or disease states discernable from the image data, and having certain similarities or contrasts in other ways only discernable from the text or other data, or from combinations of such data.

In both of these examples, and in any implementation, the analysis and presentation techniques described above may be employed, and adapted to the particular type of entity. For example, a text document such as a patent may be displayed in a highlight view with certain pertinent words or phrases highlighted. Images too may be highlighted, such as by changes in color for certain features or regions of interest, or through the use of graphical tools such as pointers, boxes, and so forth.

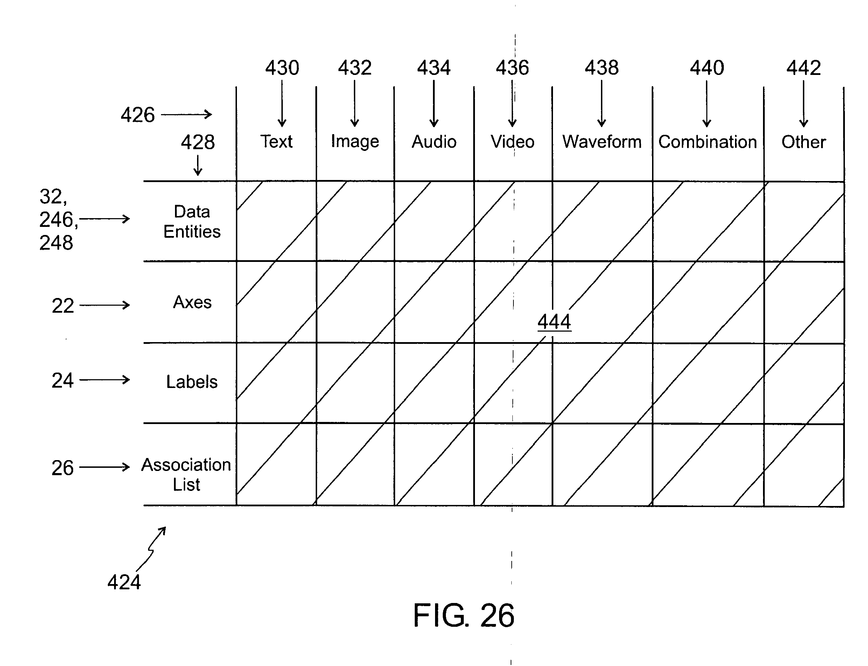

As noted above, the conceptual framework represented by the domain definition may include reference to a variety of data types, feature types, characteristics of entities, and so forth. FIG. 26 represents graphically a number of such combinations. In FIG. 26, a combinatorial matrix is represented generally by the reference numeral 424. The conceptual framework may be thought of, then, as defining intersections between features and characteristics set forth as axes 22, labels 24, association lists (of attributes) 26, and data entities 32, 246, 248 on the one hand, and different types of data on the other. The type or nature of the data is designated generally by reference numeral 426 in FIG. 26, while the defined characteristic either sought or present in the data entities (by virtue of the domain definition) is represented by reference numeral 428.

As represented in FIG. 26, presently contemplated data types include textual data 430, image data 432, audio data 436, video data 436, and waveform data 438. Data may include, however, combinations of these, as indicated by reference numeral 440, as well as other data types not represented here. For example, an image may include forms, surfaces, edges, textures, colors, or any other particular features that can be identified (visually or algorithmically) and that are subject to any type of reference, as well as other data, such as textual data. In certain contexts, for example, such textual data may be visible or detectable in an image (such as from an annotation, date stamp, and so forth), while in other contexts, the data may not appear in the image, but be part of a codified file used to reproduce the image. Similarly, particular combinations of features may be present in waveforms, audio data, video data and so forth.

It is important to note, then, that a correspondence or intersection space 444 will exist between the data types 426 and the characteristics 428. Moreover, this intersection space may be enriched by direct reference to the features or characteristics of interest both in the domain definition and in the data entities themselves. The present technique thus frees the user from constraints of definition by text, and enhances integration of searching, classification, and the other functions discussed above with the actual features and characteristics sought in their own "type vernacular."

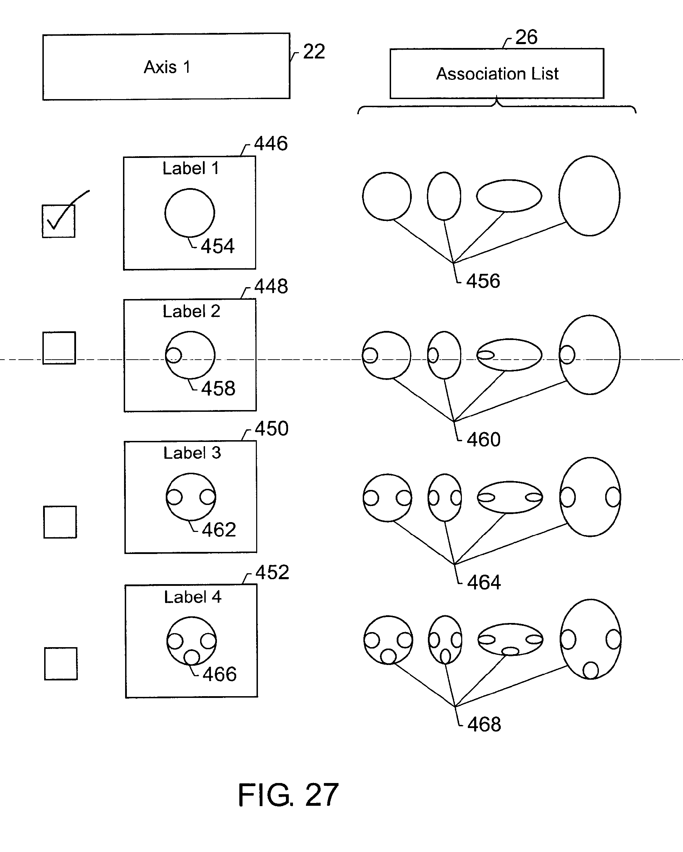

FIG. 27 represents an example of this type of definition of features in images. As represented in FIG. 27, an axis 22 includes a number of image labels 446, 448, 450 and 452. In the example illustrated, label 446 generally has the appearance of a circle 454. The subsequent labels 448, 450 and 452 have appearances of a circle within a circle 458, two circles within a circle 462, and three circles within a circle 466, respectively.

FIG. 27 also represents an association list 26 of attributes that will be anticipated or accepted for data entities to be mapped to each label. For example, as represented by reference numeral 456, entities having various forms and appearances 456 generally similar to circle 454 may be mapped to label 446. Similarly, variations of the other images or image features defined by images 458, 462 and 466 of labels 448, 450, and 452 may be mapped to those labels, as represented generally by the variation images 460, 464 and 468, respectively.

As will be appreciated by those skilled in the art, many imaginative used may be made of the ability to directly define image characteristics for search and processing as set forth above. For example, in the illustrated embodiment, medical images may be searched and mapped for occurrences of tumors by the number of sites. In different contexts, elements, anatomies, articles, and any other feature subject to definition may be sought. Such possibilities might extend to any useful feature, including such features as weapons, faces, vehicles, and so forth, to mention only a few. It should also be noted that the association list may be used to include or exclude any desired variation on the label, effectively creating a "vocabulary" of corresponding features, again in the "type vernacular" of image data entities.

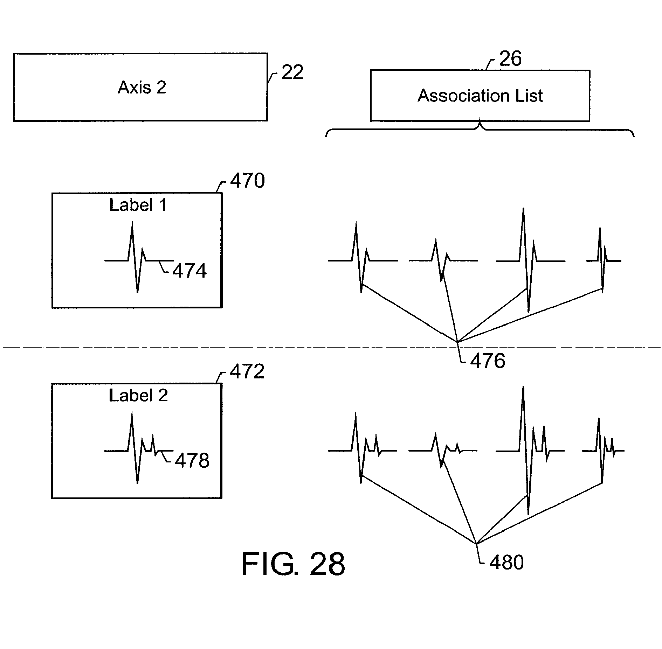

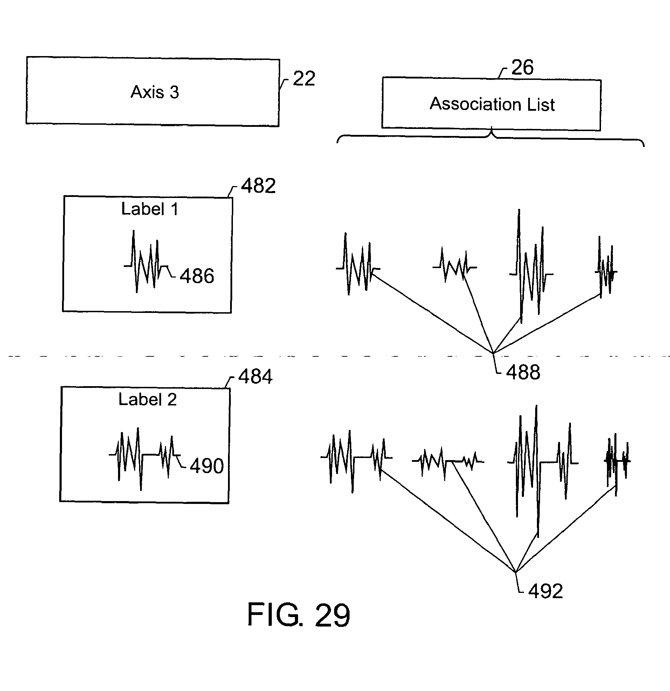

FIGs. 28 and 29 represent similar definitions of labels for other axes, for waveform and audio files, respectively. As shown in FIG. 28, labels 470 and 472 may, for example, be defined for waveforms 474 and 478, such as corresponding to a normal EKG waveform and an anomalous EKG waveform. The association list may, for each of these, include attributes that are variations of the target waveform of interest, as represented generally by reference numerals 476 and 480.

Similarly, as shown in FIG. 29, audio labels 482 and 484 may be defined for sounds 486 and 490. It should be noted that, because sounds do not readily lend themselves to a visual interface, waveforms, or any iconographical representation may be shown to facilitate human interaction with the domain and entities. Indeed, the representation might well simply include textual terms (such as "cancer" or "Dr. Smith") if those words are sought in audio data. However, it should be borne in mind that the definition of audio files is in no way limited to sounds corresponding to words. Rather, any generally sound or combination of sounds subject to definition and recognition may be specified. Attributes, which may be forms or variations of the audio feature of interest, may then be defined by the attributes 488 and 492.

In a practical implementation, any combination of such "type vernacular" features may be referenced for axes, labels and attributes. For example, in a search for cancerous tumors, an axis may include labels that result in mapping of text entities including the word "cancer" or any cognate or related word, but also of images that tend to show forms of cancer, and audio or video files that mention or show cancers. As noted above, even lower level integration may be employed, such as for different "type vernacular" attributes within the same label definition, and attributes of one type (e.g., text) that is sought in a data entity that is fundamentally of a different type (e.g., an image).

By way of illustration, the following is an example of how such multi-type domain definitions may be used in one medical diagnostic context. In the assessment of lung disease, a classification system recommended in 2002 by the International Labor Office (ILO) included guidelines and two sets of standard films. The standard films represent different types and severity of abnormalities, and are used for comparison to subject films and images during the classification process. The system is oriented towards describing the nature and extent of features associated with different pneumoconiosis, including coal workers' pneumoconiosis, silicosis, and asbestosis. It deals with parenchymal abnormalities (small and large opacities), pleural changes, and other features associated, or sometimes confused with occupational lung disease.

In the present manifestation of the ILO 2002 system, the reader is first asked to grade film quality. They are then asked to categorize small opacities according to shape and size. The size of small round opacities is characterized as p (up to 1.5 mm), q (1.5-3 mm), or r (3-10 mm). Irregular small opacities are classified by width as s, t, or u (same sizes as for small rounded opacities). Profusion (frequency) of small opacities is classified on a 4-point major category scale (0-3), with each major category divided into three, resulting in a 12-point scale between 0/- and 3/+. Large opacities are defined as any opacity greater than 1 cm that is present in an image. Large opacities are classified as category A (for one or more large opacities not exceeding a combined diameter of 5 cm), category B (large opacities with combined diameter greater than 5 cm but not exceeding the equivalent of the right upper zone, or category C (larger than B). Pleural abnormalities are also assessed with respect to location, width, extent, and degree of calcification. Finally, other abnormal features of the chest radiograph can be commented upon.

The domain definition techniques discussed above, particularly the direct definition of labels and attributes in an image context, is particularly well suited to sorting through and classifying medical images to implement the ILO 2002 system. In particular, the various forms, sizes, and counts or opacities may be designated and represented as axes, labels or attributes directly for classification purposes. Also, as noted above, such a domain may be designed such that "conceptual zooms" are possible to first recognize, then analyze the various types and categories of disease occurrences.

Another exemplary medical diagnostic implementation may be considered in the assessment of neuro-degenerative disease. Such disorders are typically difficult to detect at an early stage of their inception. Common practice is to use tracer agents in certain imaging sequences, such as SPECT and PET to determine a change in either the cerebral blood flow or the change in metabolic rate of area that indicate degeneration of cognitive ability with respect to a normal subject. A key element of the detection of neuro-degenerative disorders (NDD) is the development of age segregated normal databases. Comparison to these normals can only be made in a standardized domain, however, such as Taliarch or NMI. Consequently, data must be mapped to this standard domain using registration techniques.

Once a comparison has been made, the user is displayed a statistical deviation image of the anatomy from which to make a diagnosis of disease. This is a very specialized task and can only be performed by highly trained experts. Even these experts can only make a subjective determination as to the degree of severity of the disease. For example, the classification of a disease into its severity for one NDD (Alzheimer's disease) is mild, moderate or advanced. The ultimate determination is made by the reader based upon judgment of the deviation images.

The foregoing domain definition and mapping techniques are again well suited for implementation of an automated or semi-automated reading system for images potentially indicating NDD's. For example, the same standard images or image features currently referred to by experts for subjective diagnosis of the disease or the relative stage of the disease may be implemented as axes, labels, attributes, or combinations of these. Moreover, the domain definition and the subsequent analysis and mapping (diagnosis) based features of patient images may be made in the context or vernacular of the images themselves.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A computer-implemented method for mapping data entities (28, 30) comprising:
defining (54, 56) a domain (12) including a plurality of classification axes (22) and a plurality of classification labels (24) for each axis, and an association list of attributes (26) associated with the axes and labels, at least one axis, label or attribute including an image feature (454), a waveform feature (474), an audio feature (486), a video feature or any combination thereof;
accessing (70) a plurality of data entities (28, 30) potentially having attributes of interest;
identifying (74) data entities having attributes corresponding to the axes and labels based upon the association list; and
classifying (82) the identified data entities in accordance with the corresponding attributes.

2. The method of claim 1, wherein a label (24) is defined by an image feature (454), a waveform feature (474), an audio feature (486) or a video feature, and attributes of the label include variants (456, 476, 488) of the label feature potentially included in the accessed data entities.

3. The method of claim 1, wherein multiple labels (446, 448, 450, 452) are defined for an axis (22) by reference to an image feature (454), a waveform feature (474), an audio feature (486), or a video feature.

4. The method of claim 1, the classification includes a one-to-many mapping (84) of a data entity (28, 30) to more than one label or axis.

5. The method of claim 1, wherein at least attributes associated with at least one label include attributes for at least two of textual features (430), image features (432), waveform features (438), audio features (434), and video features (436) of data entities.

6. The method of claim 1, wherein the attributes (26) encode features of medical images, and wherein the classification includes analysis of a disease state detectable from image data.
